(19) Europäisches Patentamt
European Patent Office
Office européen des brevets

(11) **EP 4 757 196 A1**

(12) **EUROPEAN PATENT APPLICATION**
published in accordance with Art. 153(4) EPC

(43) Date of publication:
**10.06.2026 Bulletin 2026/24**

(21) Application number: **23947185.7**

(22) Date of filing: **03.08.2023**

(51) International Patent Classification (IPC):
**H04B 7/0456** (2017.01)

(52) Cooperative Patent Classification (CPC):
**H04B 7/0456; H04W 52/14; H04W 52/54**

(86) International application number:
**PCT/CN2023/111112**

(87) International publication number:
**WO 2025/025241 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventor: **ZHANG, Zhenyu**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **CODEBOOK INDICATION METHOD, TERMINAL, AND NETWORK DEVICE**

(57) The present application provides a codebook indication method, a terminal, and a network device. The method executed by the terminal comprises: determining a codebook, wherein at least one codeword in the codebook supports full-power uplink transmission of the terminal, and the terminal supports 8-port non-coherent transmission. Therefore, the terminal can transmit an uplink signal or an uplink channel at full power, thereby improving the transmission power of the terminal, and improving the uplink transmission performance.

FIG. 2

## Description

### TECHNICAL FIELD

The disclosure relates to the field of communication technologies, and in particular to a method for indicating a codebook, a terminal, and a network device.

### BACKGROUND

In the related art, uplink 8-port transmission is provided, in which a terminal supports the uplink 8-port transmission.

### SUMMARY

The method for indicating a codebook, the terminal, and the network device provided in embodiments of the disclosure are used to solve the problem that a terminal supporting 8-port non-coherent transmission does not support full-power transmission when an 8-port non-coherent codebook is used for transmission of an uplink signal or an uplink channel.

Embodiments of the disclosure provide a method for indicating a codebook, a terminal, and a network device.

According to a first aspect of embodiments of the disclosure, a method for indicating a codebook is provided. The method is performed by a terminal, including: determining a codebook, in which at least one codeword in the codebook supports full-power uplink transmission by the terminal, and the terminal supports 8-port non-coherent transmission.

In the above embodiments, the terminal may determine the codebook. In a case that the at least one codeword in the codebook supports full-power transmission of the uplink signal or the uplink channel by the terminal, the terminal may achieve full-power transmission of the uplink signal or the uplink channel. This may increase the transmission power of the terminal and improve the uplink transmission performance.

According to a second aspect of embodiments of the disclosure, a method for indicating a codebook is provided. The method is performed by a network device, including: determining a codebook for a terminal, in which at least one codeword in the codebook supports full-power uplink transmission by the terminal, and the terminal supports 8-port non-coherent transmission.

In the above embodiments, the network device may determine the codebook for the terminal, and the at least one codeword in the codebook supports the full-power uplink transmission by the terminal. This may achieve the full-power uplink transmission by the terminal, increase the transmission power of the terminal and improve the uplink transmission performance.

According to a third aspect of embodiments of the disclosure, a method for indicating a codebook is provided. The method includes: determining, by a network device, a codebook for a terminal; and determining, by a terminal, a codebook, in which at least one codeword in the codebook supports full-power uplink transmission by the terminal, and the terminal supports 8-port non-coherent transmission.

In the above embodiments, the terminal may achieve the full-power uplink transmission. This may increase the transmission power of the terminal and improve the uplink transmission performance.

According to a fourth aspect of embodiments of the disclosure, a terminal is provided. The terminal includes: a processing module, configured to determine a codebook, in which at least one codeword in the codebook supports full-power uplink transmission by the terminal, and the terminal supports 8-port non-coherent transmission.

According to a fifth aspect of embodiments of the disclosure, a network device is provided. The network device includes: a processing module, configured to determine a codebook for a terminal, in which at least one codeword in the codebook supports full-power uplink transmission by the terminal, and the terminal supports 8-port non-coherent transmission.

According to a sixth aspect of embodiments of the disclosure, a terminal is provided. The terminal includes: one or more processors, in which the terminal is configured to perform the method according to the first aspect.

According to a seventh aspect of embodiments of the disclosure, a network device is provided. The network device includes: one or more processors, in which the network device is configured to perform the method according to the second aspect.

According to an eighth aspect of embodiments of the disclosure, a communication system is provided. The communication system includes: a terminal, configured to perform the method according to the first aspect, and a network device, implement the perform according to the second aspect.

According to a ninth aspect of embodiments of the disclosure, a storage medium is provided. The storage medium stores instructions which, when executed on a communication device, cause the communication device to perform the method according to the first aspect or the second aspect.

## BRIEF DESCRIPTION OF THE DRAWINGS

FIG. 1 is a schematic diagram illustrating an architecture of a communication system according to an embodiment of the disclosure.

FIG. 2 is a flowchart illustrating a method for indicating a codebook according to an embodiment of the disclosure.

FIG. 3A is a flowchart illustrating another method for indicating a codebook according to an embodiment of the disclosure.

FIG. 3B is a flowchart illustrating another method for indicating a codebook according to an embodiment of the disclosure.

FIG. 4A is a flowchart illustrating another method for indicating a codebook according to an embodiment of the disclosure.

FIG. 4B is a flowchart illustrating another method for indicating a codebook according to an embodiment of the disclosure.

FIG. 5A is a block diagram illustrating a terminal according to an embodiment of the disclosure.

FIG. 5B is a block diagram illustrating a network device according to an embodiment of the disclosure.

FIG. 6A is a block diagram illustrating a communication device according to an embodiment of the disclosure.

FIG. 6B is a block diagram illustrating a chip according to an embodiment of the disclosure.

## DETAILED DESCRIPTION

Embodiments of the disclosure provide a method for indicating a codebook, a terminal, and a network device.

In a first aspect, embodiments of the disclosure provide a method for indicating a codebook. The method is performed by a terminal, including: determining a codebook, in which at least one codeword in the codebook supports full-power uplink transmission by the terminal, and the terminal supports 8-port non-coherent transmission.

In the above embodiments, the terminal may determine the codebook. In a case that the at least one codeword in the codebook supports the full-power transmission by the terminal, the terminal may achieve the full-power transmission. This may increase the transmission power of the terminal and improve the uplink transmission performance.

In some embodiments in combination with the first aspect, in some embodiments, the terminal receives indication information sent from a network device, in which the indication information indicates the codebook; and determines the codebook based on the indication information.

In the above embodiments, the terminal may receive the indication information sent from the network device and determine the codebook. In a case that the at least one codeword in the codebook supports the full-power transmission by the terminal, the terminal may achieve the full-power transmission. This may increase the transmission power of the terminal and improve the uplink transmission performance.

In some embodiments in combination with the first aspect, in some embodiments, the terminal supports 8-port non-coherent transmission with at least one of 1 to 7 transmission layers. At least one codeword in the codebook supports the full-power uplink transmission by the terminal.

In the above embodiments, the terminal supporting the 8-port non-coherent transmission with at least one of 1 to 7 transmission layers may determine a codebook, and in a case that the at least one codeword in the codebook supports the full-power uplink transmission by the terminal, the terminal supporting the 8-port non-coherent transmission with at least one of 1 to 7 transmission layers may achieve the full-power uplink transmission, which may increase the transmission power of the terminal and improve the uplink transmission performance.

In some embodiments in combination with the first aspect, in some embodiments, the terminal sends capability information to the network device. The capability information indicates that the terminal supports 8-port non-coherent transmission with at least one of 1 to 7 transmission layers.

In the above embodiments, the terminal may report the capability information, so that the network device may configure the codebook based on the capability information of the terminal, thus improving the communication reliability.

In some embodiments in combination with the first aspect, in some embodiments, determining the codebook by the terminal includes at least one of:

determining that the codebook is an 8-port non-coherent codebook with a first value of transmission layers to which one 8-port fully coherent codeword with the first value of transmission layers is added, in which the terminal supports 8-port non-coherent transmission with the first value of transmission layers, and the first value is at least one of 1 to 7;

determining that the codebook is an 8-port non-coherent codebook with a second value of transmission layers to which one specific 8-port fully coherent codeword with the second value of transmission layers is added, in which the terminal supports 8-port non-coherent transmission with the second value of transmission layers, and the second value is at least one of 1 to 7;

determining that the codebook is an 8-port non-coherent codebook with 1 transmission layer from which one 8-port non-coherent codeword with 1 transmission layer is deleted and to which one 8-port fully coherent codeword with 1 transmission layer is added, in which the terminal supports 8-port non-coherent transmission with 1 transmission layer;

determining that the codebook is an 8-port non-coherent codebook with 1 transmission layer from which one 8-port non-coherent codeword with 1 transmission layer is deleted and to which one specific 8-port fully coherent codeword with 1 transmission layer is added, in which the terminal supports the 8-port non-coherent transmission with 1 transmission layer;

determining that the codebook is an 8-port non-coherent codebook with a third value of transmission layers to which all 8-port fully coherent codewords with the third value of transmission layers are added, in which the terminal supports 8-port non-coherent transmission with the third value of transmission layers, and the third value is at least one of 1 to 7;

determining that the codebook is an 8-port non-coherent codebook with a fourth value of transmission layers to which one partial coherent codeword with the fourth value of transmission layers is added, in which the terminal supports 8-port non-coherent transmission with the fourth value of transmission layers, and the fourth value is at least one of 2 to 7;

determining that the codebook is an 8-port non-coherent codebook with a fifth value of transmission layers to which one specific partial coherent codeword with the fifth value of transmission layers is added, in which the terminal supports 8-port non-coherent transmission with the fifth value of transmission layers, and the fifth value is at least one of 2 to 7; or

determining that the codebook is an 8-port non-coherent codebook with a sixth value of transmission layers to which all partial coherent codewords with the sixth value of transmission layers are added, in which the terminal supports 8-port non-coherent transmission with the sixth value of transmission layers, and the sixth value is at least one of 2 to 7.

In the above embodiments, the terminal may determine the codebook, which enables the terminal to use the at least one codeword in the codebook for the full-power uplink transmission of the uplink signal or the uplink channel. This may increase the transmission power of the terminal and improve the uplink transmission performance.

In some embodiments in combination with the first aspect, in some embodiments, the codebook includes at least one of:

an 8-port non-coherent codebook with a first value of transmission layers, and one 8-port fully coherent codeword with the first value of transmission layers, in which the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, in which the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, in which the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, in which the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, in which the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, in which the terminal supports 8-port non-coherent transmission with the sixth value of transmission layers, and the sixth value is at least one of 2 to 7.

In the above embodiments, the terminal receives the codebook configured by the network device, which enables the terminal to use the at least one codeword in the codebook for the full-power uplink transmission of the uplink signal or the uplink channel. This may increase the transmission power of the terminal and improve the uplink transmission performance.

In some embodiments in combination with the first aspect, in some embodiments, for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, a first parameter, a second parameter, a third parameter and a fourth parameter are all 0; or

for 3 or 4 transmission layers, the specific 8-port fully coherent codeword is a codeword determined when an antenna configuration is a second configuration, a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, a first parameter, a second parameter and a third parameter are all 0; or

for any one of 5 to 7 transmission layers, the specific 8-port fully coherent codeword is a codeword determined when an antenna configuration is a second configuration, a first parameter, a second parameter and a third parameter are all 0;

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

the first configuration is that, in one polarization direction, a number of antenna ports in the horizontal dimension is 4 and a number of antenna ports in the vertical dimension is 1; and

the second configuration is that, in one polarization direction, a number of antenna ports in the horizontal dimension is 2 and a number of antenna ports in the vertical dimension is 2.

In the above embodiments, the terminal receives the codebook configured by the network device, which enables the terminal to use the at least one codeword in the codebook for the full-power uplink transmission of the uplink signal or the uplink channel. This may increase the transmission power of the terminal and improve the uplink transmission performance.

In some embodiments in combination with the first aspect, in some embodiments, for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

In the above embodiments, the terminal receives the codebook configured by the network device, which enables the terminal to use the at least one codeword in the codebook for the full-power uplink transmission of the uplink signal or the uplink channel. This may increase the transmission power of the terminal and improve the uplink transmission performance.

In some embodiments in combination with the first aspect, in some embodiments, for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword; or

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or

for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword; or

for 6 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

in which the first port group is {0, 1, 4, 5} and the second port group is {2, 3, 6, 7}, the third port group is {0, 4}, the fourth port group is {1, 5}, the fifth port group is {2, 6}, and the sixth port group is {3, 7};

the first codeword is a codeword with 4 antenna ports, 1 transmission layer and a TPMI being 12, or a codeword corresponding to a minimum TPMI value in a TPMI subset corresponding to a fully coherent codebook with 4 antenna ports and 1 transmission layer;

the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers;

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

In the above embodiments, the terminal receives the codebook configured by the network device, which enables the terminal to use the at least one codeword in the codebook for the full-power uplink transmission of the uplink signal or the uplink channel. This may increase the transmission power of the terminal and improve the uplink transmission performance.

In a second aspect, embodiments of the disclosure provide a method for indicating a codebook. The method is performed by a network device, including: determining a codebook for a terminal, in which at least one codeword in the codebook supports full-power uplink transmission by the terminal, and the terminal supports 8-port non-coherent transmission.

In the above embodiments, the network device may determine the codebook for the terminal, and the at least one codeword in the codebook supports the full-power uplink transmission by the terminal. This may achieve the full-power uplink transmission by the terminal, increase the transmission power of the terminal and improve the uplink transmission performance.

In some embodiments in combination with the second aspect, in some embodiments, the method further includes: sending indication information to the terminal, in which the indication information indicates the codebook.

In the above embodiments, the network device may determine the codebook for the terminal, and indicate the codebook to the terminal, in which the at least one codeword in the codebook supports the full-power uplink transmission. This may achieve full-power transmission by the terminal, increase the transmission power of the terminal and improve the uplink transmission performance.

In some embodiments in combination with the second aspect, in some embodiments, the terminal supports 8-port non-coherent transmission with at least one of 1 to 7 transmission layers.

In the above embodiments, the network device may configure the codebook for the terminal supporting the 8-port non-coherent transmission with at least one of 1 to 7 transmission layers, and the at least one codeword in the codebook supports the full-power uplink transmission by the terminal. This may achieve the full-power uplink transmission by the terminal, increase the transmission power of the terminal and improve the uplink transmission performance.

In some embodiments in combination with the second aspect, in some embodiments, the network device receives capability information sent from the terminal, in which the capability information indicates that the terminal supports the 8-port non-coherent transmission with at least one of 1 to 7 transmission layers.

In the above embodiments, the network device may receive the capability information reported by the terminal, and configure the codebook based on the capability information of the terminal, thus improving the communication reliability.

In some embodiments in combination with the second aspect, in some embodiments, determining, by the network device, the codebook for the terminal includes at least one of:

determining that the codebook is an 8-port non-coherent codebook with a first value of transmission layers to which one 8-port fully coherent codeword with the first value of transmission layers is added, in which the terminal supports 8-port non-coherent transmission with the first value of transmission layers, and the first value is at least one of 1 to 7;

determining that the codebook is an 8-port non-coherent codebook with a second value of transmission layers to which one specific 8-port fully coherent codeword with the second value of transmission layers is added, in which the terminal supports 8-port non-coherent transmission with the second value of transmission layers, and the second value is at least one of 1 to 7;

determining that the codebook is an 8-port non-coherent codebook with 1 transmission layer from which one 8-port non-coherent codeword with 1 transmission layer is deleted and to which one 8-port fully coherent codeword with 1 transmission layer is added, in which the terminal supports 8-port non-coherent transmission with 1 transmission layer;

determining that the codebook is an 8-port non-coherent codebook with 1 transmission layer from which one 8-port non-coherent codeword with 1 transmission layer is deleted and to which one specific 8-port fully coherent codeword with 1 transmission layer is added, in which the terminal supports the 8-port non-coherent transmission with 1 transmission layer;

determining that the codebook is an 8-port non-coherent codebook with a third value of transmission layers to which all 8-port fully coherent codewords with the third value of transmission layers are added, in which the terminal supports 8-port non-coherent transmission with the third value of transmission layers, and the third value is at least one of 1 to 7;

determining that the codebook is an 8-port non-coherent codebook with a fourth value of transmission layers to which one partial coherent codeword with the fourth value of transmission layers is added, in which the terminal supports 8-port non-coherent transmission with the fourth value of transmission layers, and the fourth value is at least one of 2 to 7;

determining that the codebook is an 8-port non-coherent codebook with a fifth value of transmission layers to which one specific partial coherent codeword with the fifth value of transmission layers is added, in which the terminal supports 8-port non-coherent transmission with the fifth value of transmission layers, and the fifth value is at least one of 2 to 7; or

determining that the codebook is an 8-port non-coherent codebook with a sixth value of transmission layers to which all partial coherent codewords with the sixth value of transmission layers are added, in which the terminal supports 8-port non-coherent transmission with the sixth value of transmission layers, and the sixth value is at least one of 2 to 7.

In the above embodiments, the network device may configure the codebook for the terminal, which enables the terminal to use the at least one codeword in the codebook for the full-power uplink transmission of the uplink signal or the uplink channel. This may increase the transmission power of the terminal and improve the uplink transmission performance.

In some embodiments in combination with the second aspect, in some embodiments, the codebook includes at least one of:

an 8-port non-coherent codebook with a first value of transmission layers, and one 8-port fully coherent codeword with the first value of transmission layers, in which the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, in which the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, in which the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, in which the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, in which the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, in which the terminal supports 8-port non-coherent transmission with the sixth value of transmission layers, and the sixth value is at least one of 2 to 7.

In the above embodiments, the network device may configure the codebook for the terminal, which enables the terminal to use the at least one codeword in the codebook for the full-power uplink transmission of the uplink signal or the uplink channel. This may increase the transmission power of the terminal and improve the uplink transmission performance.

In some embodiments in combination with the second aspect, in some embodiments, for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, a first parameter, a second parameter, a third parameter and a fourth parameter are all 0; or

for 3 or 4 transmission layers, the specific 8-port fully coherent codeword is a codeword determined when an antenna configuration is a second configuration, a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, a first parameter, a second parameter and a third parameter are all 0; or

for any one of 5 to 7 transmission layers, the specific 8-port fully coherent codeword is a codeword determined when an antenna configuration is a second configuration, a first parameter, a second parameter and a third parameter are all 0;

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

the first configuration is that, in one polarization direction, a number of antenna ports in the horizontal dimension is 4 and a number of antenna ports in the vertical dimension is 1; and

the second configuration is that, in one polarization direction, a number of antenna ports in the horizontal dimension is 2 and a number of antenna ports in the vertical dimension is 2.

In some embodiments in combination with the second aspect, in some embodiments, for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

In the above embodiments, the network device may configure the codebook for the terminal, which enables the terminal to use the at least one codeword in the codebook for the full-power uplink transmission of the uplink signal or the uplink channel. This may increase the transmission power of the terminal and improve the uplink transmission performance.

In some embodiments in combination with the second aspect, in some embodiments, for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword; or

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or

for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword; or

for 6 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

in which the first port group is {0, 1, 4, 5} and the second port group is {2, 3, 6, 7}, the third port group is {0, 4}, the fourth port group is {1, 5}, the fifth port group is {2, 6}, and the sixth port group is {3, 7};

the first codeword is a codeword with 4 antenna ports, 1 transmission layer and a TPMI being 12, or a codeword corresponding to a minimum TPMI value in a TPMI subset corresponding to a fully coherent codebook with 4 antenna ports and 1 transmission layer;

the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers;

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

In the above embodiments, the network device may configure the codebook for the terminal, which enables the terminal to use the at least one codeword in the codebook for the full-power uplink transmission of the uplink signal or the uplink channel. This may increase the transmission power of the terminal and improve the uplink transmission performance.

In a third aspect, embodiments of the disclosure provide a method for indicating a codebook. The method includes: determining, by a network device, a codebook for a terminal, in which the terminal supports 8-port non-coherent transmission with at least one of 1 to 7 transmission layers; sending, by the network device, indication information to the terminal; and receiving, by the termina, the indication information from the network device; the indication information indicates the codebook configured by the network device for the terminal; and at least one codeword in the codebook supports full-power uplink transmission by the terminal.

In the above embodiments, the terminal may receive the indication information sent from the network device and determine the codebook. In a case that the at least one codeword in the codebook supports the full-power uplink transmission by the terminal, the terminal may achieve the full-power uplink transmission. This may increase the transmission power of the terminal and improve the uplink transmission performance.

In a fourth aspect, embodiments of the disclosure provide a terminal. The terminal includes at least one of a transceiver module or a processing module, in which the terminal is configured to perform optional implementations of the first aspect.

In a fifth aspect, embodiments of the disclosure provide a network device. The network device includes at least one of a transceiver module or a processing module, in which the network device is configured to perform optional implementations of the second aspect.

In a sixth aspect, embodiments of the disclosure provide a terminal. The terminal includes: one or more processors, in which the terminal is configured to perform optional implementations of the first aspect.

In a seventh aspect, embodiments of the disclosure provide a network device. The network device includes: one or more processors, in which the network device is configured to perform optional implementations of the second aspect.

In an eighth aspect, embodiments of the disclosure provide a communication system. The communication system includes: a terminal, configured to perform the method described in optional implementations of the first aspect, and a network device, configured to perform the method described in optional implementations of the second aspect.

In a ninth aspect, embodiments of the disclosure provide a storage medium. The storage medium stores instructions which, when executed on a communication device, cause the communication device to perform the method described in optional implementations of the first aspect or the method described in optional implementations of the second aspect.

In a tenth aspect, embodiments of the disclosure provide a program product. The program product, when executed by a communication device, causes the communication device to perform the method described in optional implementations of the first aspect or the method described in optional implementations of the second aspect.

In an eleventh aspect, embodiments of the disclosure provide a computer program. When the computer program is running on a computer, the computer is caused to perform the method described in optional implementations of the first aspect or the method described in optional implementations of the second aspect.

In a twelfth aspect, embodiments of the disclosure provide a chip or a chip system. The chip or chip system includes a processing circuit, configured to perform the method described in optional implementations of the first aspect or the method described in optional implementations of the second aspect.

It may be understood that terminal, the network device, the communication system, the storage medium, the program product, the computer program and the chip or the chip system are all used to implement the method in the embodiments of the disclosure. Thus, regarding beneficial effects they may achieve, reference may made be to the beneficial effects in the corresponding methods, which is not repeated herein.

Embodiments of the disclosure provide a method for indicating a codebook, a terminal, and a network device. In some embodiments, terms such as "method for indicating a codebook", "method for information processing", and "communication method" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel, and the uplink, the downlink, etc. may be replaced with sidelink.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

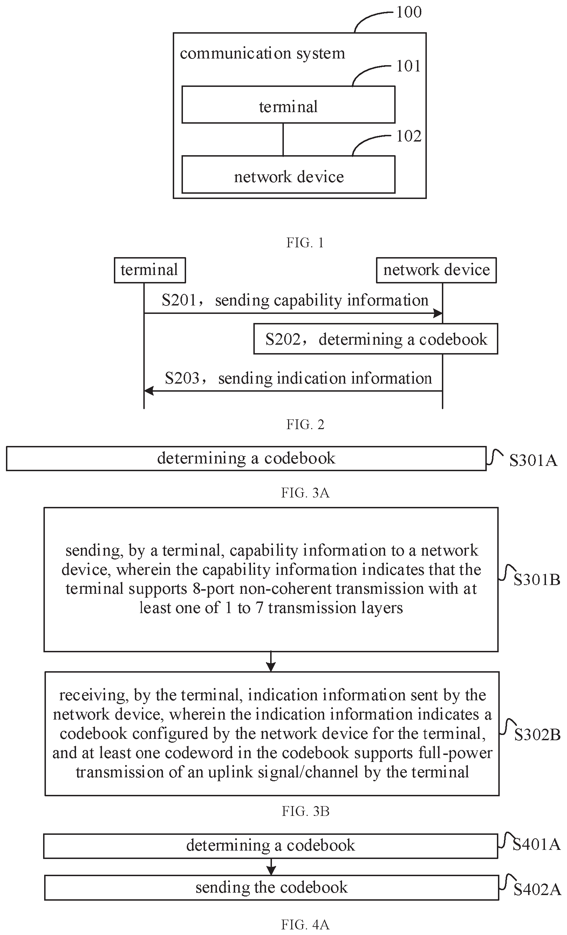

FIG. 1 is a schematic diagram illustrating an architecture of a communication system according to an embodiment of the disclosure.

As shown in FIG. 1, the communication system 100 includes a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the core network device may be a device including a first network function, a second network function, etc., or may be a plurality of devices or device groups, each including all or part of the first network function, the second network function, etc. The network element may be virtual or physical. The core network may include, for example, at least one of an evolved packet core (EPC), a 5G core network (5GCN), or a next generation core (NGC).

In some embodiments, the first network function may be, for example, an access and mobility management function (AMF).

In some embodiments, the first network function is configured for access control and mobility management of a terminal accessing an operator network. For example, the access control and mobility management includes functions such as mobility state management, allocation of a temporary user identity, and user authentication and authorization, and the name is not limited herein.

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

For uplink 8-port transmission enhancement, designs are provided for a fully coherent codebook, a partially coherent codebook, a non-coherent codebook, a TPMI, and a full-power transmission.

A number of antenna port groups of the terminal is Ng, antennas within each antenna port group perform fully

16

coherent transmission, and antennas between different antenna port groups perform non-coherent transmission.

When the terminal is a fully coherent terminal, Ng=1. When the terminal is a partially coherent terminal, Ng=2 or 4. When the terminal is a non-coherent terminal, Ng=8. For an 8-port fully coherent codebook, a Release 15 (R15) downlink type I codebook with 8 ports is adopted, and an oversampling factor is set to 1. For a partial coherent codebook with Ng=2, the design is based on an R15 uplink 4-port codebook. For a partial coherent codebook with Ng=4, the design is based on an R15 uplink 2-port codebook. For a non-coherent codebook with Ng=8, all antenna selection vectors or antenna selection matrices are adopted.

It may be understood that, for some 8-port codewords, full-power transmission cannot be achieved due to limitations of physical uplink shared channel (PUSCH) power control rules.

In the PUSCH power control rules, a transmission power needs to be multiplied by a power scaling factor. The power scaling factor is defined as a number of non-zero antenna ports for PUSCH transmission divided by the total number of configured antenna ports. For example, when the 4-port codeword is $\begin{bmatrix} 1 \\ 0 \\ 1 \\ 0 \end{bmatrix}$, the parameter is 2/4=1/2, i.e., full-power transmission cannot be achieved; when the 4-port codeword is $\begin{bmatrix} 1 & 0 \\ 0 & 1 \\ 1 & 0 \\ 0 & -j \end{bmatrix}$, the parameter is 4/4=1, i.e., full-power transmission may be achieved.

Thus, when the number of uplink transmission ports is 8, the full-power transmission may be achieved in the 8-port fully coherent codebook. The full-power transmission cannot be achieved in the 8-port partially coherent codebook with Ng=2 and 1 transmission layer. The full-power transmission cannot be achieved in the 8-port partially coherent codebook with Ng=4 and any one of 1 to 3 transmission layers. The full-power transmission cannot be achieved in the 8-port non-coherent codebook with Ng=8 and any one of 1 to 7 transmission layers.

In the discussions of the full-power transmission for uplink 2 ports and uplink 4 ports, to achieve the full-power transmission, a plurality of full-power transmission modes are defined. Based on different power amplifier (PA) architectures of the terminal, three different capabilities 1-3 are defined for the terminal for the power class 3.

In the capability 1, each radio frequency (RF) chain is configured with a PA capable of full power, for example, [23 23] dBm. In the capability 2, no RF chain is configured with a PA capable of full power, for example, [20 20] dBm. In the capability 3, some RF chains are configured with PAs capable of full power, for example, [23 20] dBm.

For the three different capabilities of the terminal, three full-power transmission modes 0-2 are provided. In the mode 0, the PUSCH power scaling factor is fixedly set to 1, corresponding to the capability 1 of the terminal. Since each PA is capable of transmitting at full power, non-coherent codewords can achieve full-power transmission. For example, for the codeword $\frac{1}{\sqrt{2}}\begin{bmatrix} 1 \\ 0 \end{bmatrix}$, the full-power transmission is achieved using the first PA. In the mode 1 corresponding to the capability 2 and the capability 3 of the terminal, the full-power transmission is achieved by introducing codewords that support the full-power transmission based on an original codebook subset restriction. For example, for a non-coherent codebook with 4 ports and 2 layers, a partially coherent codeword $\frac{1}{2}\begin{bmatrix} 1 & 0 \\ 0 & 1 \\ 1 & 0 \\ 0 & -j \end{bmatrix}$ with 4 ports and 2 layers is introduced. In the mode 2 corresponding to the capability 2 and the capability 3 of the terminal, the full-power transmission is achieved in two methods. In the method 1, the terminal achieves the full-power transmission via virtualization of a sounding reference signal (SRS) port. For example, for [20 20 17 17] dBm, a base station configures a 2-port SRS, and a UE may obtain [23 20] dBm via virtualization of the SRS port, that is, using the codeword $\frac{1}{\sqrt{2}}\begin{bmatrix} 1 \\ 0 \end{bmatrix}$ to achieve the full-power transmission. In the method 2, the terminal reports a TPMI group that supports the full-power transmission based on the PA architecture. For example, for [20 20 20 17] dBm, a TPMI group G3 may be reported.

For example, as shown in Table 1, codewords included in the TPMI group G3 are illustrated.

Table 1

| G3 | $\left\{\dfrac{1}{2}\begin{bmatrix}1&0\\0&0\\0&1\\0&0\end{bmatrix},\dfrac{1}{2}\begin{bmatrix}1&0\\0&1\\0&0\\0&0\end{bmatrix},\dfrac{1}{2}\begin{bmatrix}0&0\\1&0\\0&1\\0&0\end{bmatrix}\right\},\dfrac{1}{2}\begin{bmatrix}1&0&0\\0&1&0\\0&0&1\\0&0&0\end{bmatrix}$ |
|---|---|

In some embodiments, for a non-coherent codebook with 2 antenna ports, to achieve the uplink full-power transmission:

in a case of 1 transmission layer, a codeword corresponding to TPMI=2 is added.

In some embodiments, for a non-coherent codebook with 4 antenna ports, to achieve the uplink full-power transmission:

in a case of 1 transmission layer, for both cyclic prefix orthogonal frequency division multiplexing (CP-OFDM) and discrete Fourier transform spread orthogonal frequency division multiplexing (DFT-s-OFDM) waveforms, a codeword corresponding to TPMI=13 is added;

in a case of 2 transmission layers, a codeword corresponding to TPMI=6 is added; and

in a case of 3 transmission layers, a codeword corresponding to TPMI=1 is added.

In some embodiments, for a partially coherent codebook with 4 antenna ports, to achieve the uplink full-power transmission:

in a case of 1 transmission layer, for both CP-OFDM and DFT-s-OFDM waveforms, a codeword corresponding to TPMI=12-15 is added.

In the related art, a terminal supporting 8-port non-coherent transmission with at least one of 1 to 7 transmission layers does not support the full-power transmission when an 8-port non-coherent codebook with at least one of 1 to 7 transmission layers is used for transmission of the uplink signal or the uplink channel. This is an urgent problem to be solved.

Based on the above problem, embodiments of the disclosure provide a method for indicating a codebook, a terminal, and a network device. The method performed by the terminal includes: receiving indication information sent from the network device, in which the indication information indicates a codebook configured by the network device for the terminal; the terminal supports the 8-port non-coherent transmission with at least one of 1 to 7 transmission layers; and at least one codeword in the codebook supports full-power uplink transmission by the terminal. Thus, the terminal may achieve the full-power uplink transmission, which may increase the transmission power of the terminal and improve the uplink transmission performance.

FIG. 2 is an interaction diagram illustrating a method for indicating a codebook according to an embodiment of the disclosure. As shown in FIG. 2, embodiments of the disclosure relate to a method for indicating a codebook. The method includes the following steps S201 to S203.

At **S201,** a terminal sends capability information to a network device.

In this embodiment of the disclosure, the terminal may send the capability information to the network device. The capability information may indicate an uplink transmission capability of the terminal.

For example, the capability information may indicate that the terminal supports 8-port uplink transmission.

For example, the capability information may indicate that the terminal supports 8-port non-coherent uplink transmission.

It may be understood that the terminal supporting the 8-port non-coherent uplink transmission may mean that the terminal supports using an 8-port non-coherent codebook for uplink transmission.

For example, for the 8-port non-coherent codebook, all the antenna selection vectors or antenna selection matrices are adopted.

For example, only one non-zero value is present in each row of a matrix for any one codeword in the 8-port non-coherent codebook, e.g., only one 1 is present in each row.

In some embodiments, the capability information indicates that the terminal supports the 8-port non-coherent transmission with at least one of 1 to 7 transmission layers.

In some embodiments, the capability information may indicate that the terminal supports 8-port non-coherent transmission with 1 transmission layer.

In some embodiments, the capability information may indicate that the terminal supports 8-port non-coherent transmission with 2 transmission layers.

In some embodiments, the capability information may indicate that the terminal supports 8-port non-coherent transmission with 3 transmission layers.

In some embodiments, the capability information may indicate that the terminal supports 8-port non-coherent transmission with 4 transmission layers.

In some embodiments, the capability information may indicate that the terminal supports 8-port non-coherent transmission with 5 transmission layers.

In some embodiments, the capability information may indicate that the terminal supports 8-port non-coherent transmission with 6 transmission layers.

In some embodiments, the capability information may indicate that the terminal supports 8-port non-coherent transmission with 7 transmission layers.

It should be noted that, in the embodiments of the disclosure, a number of transmission layers is equal to a rank value. The number of transmission layers may also be replaced with the rank value, which is not specifically limited in embodiments of the disclosure.

In some embodiments, the terminal may independently send the capability information to the network device, or may also send the capability information to the network device based on an indication from the network device.

For example, the network device may send a capability request message to the terminal, requesting the terminal to report the capability information. In case of receiving the capability request message sent from the network device, the terminal may send the capability information to the network device.

In some embodiments, the name of the capability information is not limited, and the name of the capability information may be, for example, "function information", "first information", or the like.

It may be understood that when the terminal sends the capability information to the network device, an existing signaling or message may be reused, or a new signaling or message may also be used.

For example, the terminal sends a radio resource control (RRC) signaling to the network device, and the RRC signaling may include the capability information.

For example, the network device receives the RRC signaling sent from the terminal, and the RRC signaling may include the capability information.

At **S202,** the network device determines a codebook for the terminal.

In the embodiments of the disclosure, the network device may determine a codebook for the terminal and configure the determined codebook for the terminal.

In some embodiments, the network device may determine the capability information of the terminal and determine the codebook for the terminal based on the capability information of the terminal.

In some embodiments, in a case that the network device receives the capability information sent from the terminal, and the capability information indicates that the terminal supports 8-port non-coherent transmission with at least one of 1 to 7 transmission layers, the network device may determine that the terminal supports the 8-port non-coherent transmission with at least one of 1 to 7 transmission layers.

In some embodiments, the terminal supports the 8-port non-coherent transmission with at least one of 1 to 7 transmission layers.

In some embodiments, the terminal supports 8-port non-coherent transmission with 1 transmission layer.

In some embodiments, the terminal supports 8-port non-coherent transmission with 2 transmission layers.

In some embodiments, the terminal supports 8-port non-coherent transmission with 3 transmission layers.

In some embodiments, the terminal supports 8-port non-coherent transmission with 4 transmission layers.

In some embodiments, the terminal supports 8-port non-coherent transmission with 5 transmission layers.

In some embodiments, the terminal supports 8-port non-coherent transmission with 6 transmission layers.

In some embodiments, the terminal supports 8-port non-coherent transmission with 7 transmission layers.

In some embodiments, at least one codeword in the codebook supports full-power uplink transmission by the terminal.

In some embodiments, the at least one codeword in the codebook supports full-power transmission of an uplink signal by the terminal.

In some embodiments, the at least one codeword in the codebook supports full-power transmission of an uplink channel by the terminal.

In this embodiment of the disclosure, in a case that the network device determines that the terminal supports the 8-port non-coherent transmission with at least one of 1 to 7 transmission layers, the network device may determine the codebook for the terminal, in which the at least one codeword in the determined codebook supports the full-power uplink transmission by the terminal.

It may be understood that, if the at least one codeword in the codebook determined by the network device supports the full-power uplink transmission by the terminal, and if the network device configures the determined codebook for the terminal, the terminal may use the codebook configured by the network device for the full-power transmission of the uplink signal or the uplink channel.

In some embodiments, in a case that the network device determines that the terminal supports the 8-port non-coherent transmission with at least one of 1 to 7 transmission layers, the network device determines the codebook for the terminal. The codebook may be an 8-port non-coherent codebook with at least one of 1 to 7 transmission layers to which some specific codewords are added, or the codebook may also be an 8-port non-coherent codebook with at least one of 1 to 7 transmission layers in which some specific codewords are replaced with some other codewords.

The specific codeword may support the full-power uplink transmission by the terminal.

For example, the specific codeword may be a codeword from an 8-port fully coherent codebook, or may also be a codeword from a partial coherent codebook.

It may be understood that, for the 8-port fully coherent codebook, the R15 downlink type I codebook with 8 ports is adopted, and an oversampling factor is set to 1.

For example, the specific codeword may be a codeword from an 8-port partial coherent codebook with 2 antenna port groups and/or a codeword from an 8-port partial coherent codebook with 4 antenna port groups.

It may be understood that the 8-port partial coherent codebook with 2 antenna port groups is designed based on the R15 uplink 4-port codebook, and the 8-port partial coherent codebook with 4 antenna port groups is designed based on the R15 uplink 2-port codebook.

It may be understood that the number of specific codewords may be one or more, which is not specifically limited in embodiments of the disclosure.

In some embodiments, determining the codebook for the terminal by the network deice includes at least one of:

determining that the codebook is an 8-port non-coherent codebook with a first value of transmission layers to which one 8-port fully coherent codeword with the first value of transmission layers is added, in which the terminal supports 8-port non-coherent transmission with the first value of transmission layers, and the first value is at least one of 1 to 7;
determining that the codebook is an 8-port non-coherent codebook with a second value of transmission layers to which one specific 8-port fully coherent codeword with the second value of transmission layers is added, in which the terminal supports 8-port non-coherent transmission with the second value of transmission layers, and the second value is at least one of 1 to 7;
determining that the codebook is an 8-port non-coherent codebook with 1 transmission layer from which one 8-port non-coherent codeword with 1 transmission layer is deleted and to which one 8-port fully coherent codeword with 1 transmission layer is added, in which the terminal supports 8-port non-coherent transmission with 1 transmission layer;
determining that the codebook is an 8-port non-coherent codebook with 1 transmission layer from which one 8-port non-coherent codeword with 1 transmission layer is deleted and to which one specific 8-port fully coherent codeword with 1 transmission layer is added, in which the terminal supports the 8-port non-coherent transmission with 1 transmission layer;
determining that the codebook is an 8-port non-coherent codebook with a third value of transmission layers to which all 8-port fully coherent codewords with the third value of transmission layers are added, in which the terminal supports 8-port non-coherent transmission with the third value of transmission layers, and the third value is at least one of 1 to 7;
determining that the codebook is an 8-port non-coherent codebook with a fourth value of transmission layers to which one partial coherent codeword with the fourth value of transmission layers is added, in which the terminal supports 8-port non-coherent transmission with the fourth value of transmission layers, and the fourth value is at least one of 2 to 7;
determining that the codebook is an 8-port non-coherent codebook with a fifth value of transmission layers to which one specific partial coherent codeword with the fifth value of transmission layers is added, in which the terminal supports 8-port non-coherent transmission with the fifth value of transmission layers, and the fifth value is at least one of 2 to 7; or
determining that the codebook is an 8-port non-coherent codebook with a sixth value of transmission layers to which all partial coherent codewords with the sixth value of transmission layers are added, in which the terminal supports 8-port non-coherent transmission with the sixth value of transmission layers, and the sixth value is at least one of 2 to 7.

It may be understood that the 8-port fully coherent codeword is a codeword in the 8-port fully coherent codebook.

For the 8-port fully coherent codebook, the R15 downlink type I codebook with 8 ports is adopted, and the oversampling factor is set to 1.

It may be understood that the partial coherent codeword is a codeword from the 8-port partial coherent codebook with 2 antenna port groups and/or a codeword from the 8-port partial coherent codebook with 4 antenna port groups.

The 8-port partial coherent codebook with 2 antenna port groups is designed based on the R15 uplink 4-port codebook, and the 8-port partial coherent codebook with 4 antenna port groups is designed based on the R15 uplink 2-port codebook.

In some embodiments, the codebook includes at least one of:

an 8-port non-coherent codebook with a first value of transmission layers, and one 8-port fully coherent codeword with the first value of transmission layers, in which the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, in which the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, in which the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, in which the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, in which the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, in which the terminal supports 8-port non-coherent transmission with the sixth value of transmission layers, and the sixth value is at least one of 2 to 7.

In the embodiments of the disclosure, the codebook may include the 8-port non-coherent codebook with any one of 1 to 7 transmission layers and one 8-port fully coherent codeword.

It may be understood that the one 8-port fully coherent codeword may be any one codeword in the 8-port fully coherent codebook.

In the embodiments of the disclosure, the codebook may include the 8-port non-coherent codebook with any one of 1 to 7 transmission layers and one specific 8-port fully coherent codeword.

In the embodiments of the disclosure, the codebook may include the 8-port non-coherent codebook with 1 transmission layer from which one 8-port non-coherent codeword is deleted, and one 8-port fully coherent codeword with 1 transmission layer.

In the embodiments of the disclosure, the codebook may include the 8-port non-coherent codebook with 1 transmission layer from which one 8-port non-coherent codeword is deleted, and one specific 8-port fully coherent codeword with 1 transmission layer.

It may be understood that, in a case that the codebook configured by the network device for the terminal is the 8-port non-coherent codebook with 1 transmission layer, the used bit overhead is 3 bits. If the codebook includes the 8-port non-coherent codebook with any one of 1 to 7 transmission layers and the one 8-port fully coherent codeword, the used bit overhead may become 4 bits. If the codebook includes the 8-port non-coherent codebook with any one of 1 to 7 transmission layers and the one specific 8-port fully coherent codeword, the used bit overhead may become 4 bits.

Similarly, it may be understood that, when the maximum number of transmission layers is configured to 1, if the codebook includes the 8-port non-coherent codebook with 1 transmission layer from which the one 8-port non-coherent codeword is deleted and the one 8-port fully coherent codeword, then the used bit overhead may remain unchanged, at 3 bits. If the codebook includes the 8-port non-coherent codebook with 1 transmission layer from which the one 8-port non-coherent codeword is deleted and the one specific 8-port fully coherent codeword, then the used bit overhead may remain unchanged, also at 3 bits.

In some embodiments, for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, a first parameter, a second parameter, a third parameter and a fourth parameter are all 0; or

for 3 or 4 transmission layers, the specific 8-port fully coherent codeword is a codeword determined when an antenna configuration is a second configuration, a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, a first parameter, a second parameter and a third parameter are all 0; or

for any one of 5 to 7 transmission layers, the specific 8-port fully coherent codeword is a codeword determined when an antenna configuration is a second configuration, a first parameter, a second parameter and a third parameter are all 0;

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

the first configuration is that, in one polarization direction, a number of antenna ports in the horizontal dimension is 4 and a number of antenna ports in the vertical dimension is 1; and

the second configuration is that, in one polarization direction, a number of antenna ports in the horizontal dimension is 2 and a number of antenna ports in the vertical dimension is 2.

In the embodiments of the disclosure, for 1 transmission layer, the specific 8-port fully coherent codeword is the codeword determined when the first parameter, the second parameter, and the third parameter are all 0, in which the first parameter indicates the beam index selected in the horizontal dimension, the second parameter indicates the beam index selected in the vertical dimension, and the third parameter indicates the co-phasing coefficient between two polarization directions.

For example, for 1 transmission layer, the specific 8-port fully coherent codeword may be a codeword A determined when the first parameter, the second parameter, and the third parameter are all 0, and the codeword $A$ is

$$A = \frac{1}{\sqrt{8}} \begin{bmatrix} 1 \\ 1 \\ 1 \\ 1 \\ 1 \\ 1 \\ 1 \\ 1 \end{bmatrix}.$$

It should be noted that for the first and second configurations and for 1 transmission layer, the specific 8-port fully coherent codeword (i.e., the codeword determined when the first parameter, the second parameter, and the third parameter are all 0) may all be the codeword $A$.

It should be noted that the coefficient $\frac{1}{\sqrt{8}}$ of the codeword $A$ is not unique, and the coefficient of the codeword $A$ may take other values, which is not specifically limited in the embodiments of the disclosure.

In the embodiments of the disclosure, for 2 transmission layers, and the specific 8-port fully coherent codeword is the codeword determined when the first parameter, the second parameter, the third parameter, and the fourth parameter are all 0; in which the first parameter indicates the beam index selected in the horizontal dimension, the second parameter indicates the beam index selected in the vertical dimension, the third parameter indicates the co-phase coefficient between two polarization directions, and the fourth parameter indicates the rotation index.

For example, for 2 transmission layers, the specific 8-port fully coherent codeword may be a codeword $B$ determined when the first parameter, the second parameter, the third parameter and the fourth parameter are all 0, and the codeword B is

$$B = \frac{1}{\sqrt{16}} \begin{bmatrix} 1 & 1 \\ 1 & 1 \\ 1 & 1 \\ 1 & 1 \\ 1 & -1 \\ 1 & -1 \\ 1 & -1 \\ 1 & -1 \end{bmatrix}.$$

It should be noted that for the first and second configurations and for 2 transmission layers, the specific 8-port fully coherent codeword (i.e., the codeword determined when the first parameter, the second parameter, the third parameter and the fourth parameter are all 0) may all be the codeword *B*.

It should be noted that the coefficient $\dfrac{1}{\sqrt{16}}$ of the codeword *B* is not unique, and the coefficient of the codeword *B* may take other values, which is not specifically limited in the embodiments of the disclosure.

In the embodiments of the disclosure, for 3 or 4 transmission layers, the specific 8-port fully coherent codeword is the codeword determined when the antenna configuration is the first configuration, the first parameter, the second parameter, the third parameter and the fourth parameter are all 0; in which the first configuration is that, in one polarization direction, the number of antenna ports in the horizontal dimension is 4 and the number of antenna ports in the vertical dimension is 1, the first parameter indicates the beam index selected in the horizontal dimension, the second parameter indicates the beam index selected in the vertical dimension, the third parameter indicates the co-phasing coefficient between two polarization directions, and the fourth parameter indicates the rotation index.

For example, for 3 transmission layers, the specific 8-port fully coherent codeword may be a codeword *D* determined when the antenna configuration is the first configuration, the first parameter, the second parameter, the third parameter and the fourth parameter are all 0, and the codeword *D* is

$$D = \frac{1}{\sqrt{24}} \begin{bmatrix} 1 & 1 & 1 \\ 1 & j & 1 \\ 1 & -1 & 1 \\ 1 & -j & 1 \\ 1 & 1 & -1 \\ 1 & j & -1 \\ 1 & -1 & -1 \\ 1 & -j & -1 \end{bmatrix}.$$

It should be noted that the coefficient $\dfrac{1}{\sqrt{24}}$ of the codeword *D* is not unique, and the coefficient of the codeword *D* may take other values, which is not specifically limited in the embodiments of the disclosure.

In the embodiments of the disclosure, for 3 or 4 transmission layers, the specific 8-port fully coherent codeword is the codeword determined when the antenna configuration is the second configuration, the first parameter, the second parameter, the third parameter and the fourth parameter are all 0; in which the second configuration is that, in one polarization direction, the number of antenna ports in the horizontal dimension is 2 and the number of antenna ports in the vertical dimension is 2, the first parameter indicates the beam index selected in the horizontal dimension, the second parameter indicates the beam index selected in the vertical dimension, the third parameter indicates the co-phasing coefficient between two polarization directions, and the fourth parameter indicates the rotation index.

For example, for 3 transmission layers, the specific 8-port fully coherent codeword may be a codeword E determined when the antenna configuration is the second configuration, the first parameter, the second parameter, the third parameter and the fourth parameter are all 0, and the codeword *E* is

$$E = \frac{1}{\sqrt{24}} \begin{bmatrix} 1 & 1 & 1 \\ 1 & 1 & 1 \\ 1 & -1 & 1 \\ 1 & -1 & 1 \\ 1 & 1 & -1 \\ 1 & 1 & -1 \\ 1 & -1 & -1 \\ 1 & -1 & -1 \end{bmatrix}.$$

It should be noted that the coefficient $\frac{1}{\sqrt{24}}$ of the codeword E is not unique, and the coefficient of the codeword E may take other values, which is not specifically limited in the embodiments of the disclosure.

In the embodiments of the disclosure, for 3 or 4 transmission layers, the specific 8-port fully coherent codeword is the codeword determined when the first parameter, the second parameter and the third parameter are all 0, and the fourth parameter is 1; in which the first parameter indicates the beam index selected in the horizontal dimension, the second parameter indicates the beam index selected in the vertical dimension, the third parameter indicates the co-phasing coefficient between two polarization directions, and the fourth parameter indicates the rotation index.

For example, for 3 transmission layers, the specific 8-port fully coherent codeword may be a codeword F determined when the first parameter, the second parameter and the third parameter are all 0, and the fourth parameter is 1,

$$F = \frac{1}{\sqrt{24}} \begin{bmatrix} 1 & 1 & 1 \\ 1 & -1 & 1 \\ 1 & 1 & 1 \\ 1 & -1 & 1 \\ 1 & 1 & -1 \\ 1 & -1 & -1 \\ 1 & 1 & -1 \\ 1 & -1 & -1 \end{bmatrix}.$$

and the codeword F is

It should be noted that for the first and second configurations and for 3 transmission layers, the specific 8-port fully coherent codeword (i.e., the codeword determined when the first parameter, the second parameter and the third parameter are all 0, and the fourth parameter is 1) may all be the codeword F.

It should be noted that the coefficient of the codeword F is not unique, and the coefficient of the codeword F may take other values, which is not specifically limited in the embodiments of the disclosure.

In the embodiments of the disclosure, for any one of 5 to 7 transmission layers, the specific 8-port fully coherent codeword is the codeword determined when the antenna configuration is the first configuration, the first parameter, the second parameter and the third parameter are all 0; in which the first configuration is that, in one polarization direction, the number of antenna ports in the horizontal dimension is 4 and the number of antenna ports in the vertical dimension is 1, the first parameter indicates the beam index selected in the horizontal dimension, the second parameter indicates the beam index selected in the vertical dimension, and the third parameter indicates the co-phasing coefficient between two polarization directions.

For example, for 5 transmission layers, the specific 8-port fully coherent codeword may be a codeword K determined when the antenna configuration is the first configuration, the first parameter, the second parameter and the third parameter are all 0, and the codeword K is

$$K = \frac{1}{\sqrt{40}} \begin{bmatrix} 1 & 1 & 1 & 1 & 1 \\ 1 & 1 & j & j & -1 \\ 1 & 1 & -1 & -1 & 1 \\ 1 & 1 & -j & -j & -1 \\ 1 & -1 & 1 & -1 & 1 \\ 1 & -1 & j & -j & -1 \\ 1 & -1 & -1 & 1 & 1 \\ 1 & -1 & -j & j & -1 \end{bmatrix}.$$

It should be noted that the coefficient $\dfrac{1}{\sqrt{40}}$ of the codeword $K$ is not unique, and the coefficient of the codeword $K$ may take other values, which is not specifically limited in the embodiments of the disclosure.

In the embodiments of the disclosure, for any one of 5 to 7 transmission layers, the specific 8-port fully coherent codeword is the codeword determined when the antenna configuration is the second configuration, the first parameter, the second parameter and the third parameter are all 0; in which the second configuration is that, in one polarization direction, the number of antenna ports in the horizontal dimension is 2 and the number of antenna ports in the vertical dimension is 2, the first parameter indicates the beam index selected in the horizontal dimension, the second parameter indicates the beam index selected in the vertical dimension, and the third parameter indicates the co-phasing coefficient between two polarization directions.

For example, for 5 transmission layers, the specific 8-port fully coherent codeword may be a codeword L determined when the antenna configuration is the second configuration, the first parameter, the second parameter and the third parameter are all 0, and the codeword $L$ is

$$L = \frac{1}{\sqrt{40}} \begin{bmatrix} 1 & 1 & 1 & 1 & 1 \\ 1 & 1 & 1 & 1 & -1 \\ 1 & 1 & -1 & -1 & -1 \\ 1 & 1 & -1 & -1 & 1 \\ 1 & -1 & 1 & -1 & 1 \\ 1 & -1 & 1 & -1 & -1 \\ 1 & -1 & -1 & 1 & -1 \\ 1 & -1 & -1 & 1 & 1 \end{bmatrix}.$$

It should be noted that the coefficient $\dfrac{1}{\sqrt{40}}$ of the codeword L is not unique, and the coefficient of the codeword $L$ may take other values, which is not specifically limited in the embodiments of the disclosure.

For example, the first configuration is that in one polarization direction, the number of antenna ports in the horizontal dimension is 4 and the number of antenna ports in the vertical dimension is 1. The antenna configuration is (N1, N2), and (N1, N2) = (4, 1).

For example, the second configuration is that in one polarization direction, the number of antenna ports in the horizontal dimension is 2 and the number of antenna ports in the vertical dimension is 2. The antenna configuration is (N1, N2), and (N1, N2) = (2, 2).

For example, the first parameter is 'i1,1', the second parameter is 'i1,2', the third parameter is 'i2', and the fourth parameter is 'i1,3'.

In some embodiments, for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

In the embodiments of the disclosure, for any one of 2 to 7 transmission layers, the partial coherent codeword is an 8-port partial coherent codeword with 2 antenna port groups.

In the embodiments of the disclosure, for any one of 4 to 7 transmission layers, the partial coherent codeword is an 8-port partial coherent codeword with 4 antenna port groups.

In the embodiments of the disclosure, for any one of 4 to 7 transmission layers, the partial coherent codeword is the 8-port partial coherent codeword with 2 antenna port groups and the 8-port partial coherent codeword with 4 antenna port groups.

for example, the partial coherent codeword may be a codeword in an 8-port partial coherent codebook with 2 antenna port groups and/or a codeword in an 8-port partial coherent codebook with 4 antenna port groups.

It may be understood that the 8-port partial coherent codebook with 2 antenna port groups is designed based on the R15 uplink 4-port codebook, and the 8-port partial coherent codebook with 4 antenna port groups is designed based on the R15 uplink 2-port codebook.

In some embodiments, for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword; or

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or

for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword;

for 6 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

in which the first port group is {0, 1, 4, 5} and the second port group is {2, 3, 6, 7}, the third port group is {0, 4}, the fourth port group is {1, 5}, the fifth port group is {2, 6}, and the sixth port group is {3, 7};

the first codeword is a codeword with 4 antenna ports, 1 transmission layer and a TPMI being 12, or a codeword corresponding to a minimum TPMI value in a TPMI subset corresponding to a fully coherent codebook with 4 antenna ports and 1 transmission layer;

the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers;

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

In the embodiments of the disclosure, for 2 transmission layers, the specific partial coherent codeword is related to the first codeword, the mapping relationship exists between the values corresponding to the ports in the first port group of the first layer of the specific partial coherent codeword and the values corresponding to the ports of the first codeword, and the mapping relationship exists between the values corresponding to the ports in the second port group of the second layer of the specific partial coherent codeword and the values corresponding to the ports of the first codeword;

in which the first port group is {0,1,4,5}, the second port group is {2,3,6,7}; the first codeword is the codeword with 4 antenna ports, 1 transmission layer, and the TPMI being 12, or the codeword corresponding to the minimum TPMI value in the TPMI subset corresponding to the fully coherent codebook with 4 antenna ports and 1 transmission layer.

For example, the first codeword is the codeword with 4 antenna ports, for 1 transmission layer, and the TPMI being 12; for 2 transmission layers, the specific partial coherent codeword is related to the first codeword, and the specific partial coherent codeword is C, i.e.,

$$C = \begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix}.$$

It should be noted that the codeword C may also have a coefficient, and the value of the coefficient is not specifically limited in the embodiments of the disclosure.

In the embodiments of the disclosure, for 3 transmission layers, the specific partial coherent codeword is related to the first codeword and the second codeword, the mapping relationship exists between the values corresponding to the ports in the first port group of the first layer of the specific partial coherent codeword and the values corresponding to the ports of the first codeword, the mapping relationship exists between the values corresponding to the ports in the second port group of the second layer of the specific partial coherent codeword and the values corresponding to the ports of the first codeword, and the mapping relationship exists between values corresponding to the ports in the second port group of the third layer of the specific partial coherent codeword and the values corresponding to the ports of the second layer of the second codeword;

in which the first port group is {0,1,4,5}, the second port group is {2,3,6,7}; the first codeword is the codeword with 4 antenna ports, 1 transmission layer, and the TPMI being 12, or the codeword corresponding to the minimum TPMI value in the TPMI subset corresponding to the fully coherent codebook with 4 antenna ports and 1 transmission layer; the second codeword is the codeword with 4 antenna ports, 2 transmission layers, and the TPMI being 14, or the codeword corresponding to the minimum TPMI value in the TPMI subset corresponding to the fully coherent codebook with 4 antenna ports and 2 transmission layers.

For example, the first codeword is the codeword with 4 antenna ports, 1 transmission layer, and the TPMI being 12 and the second codeword is the codeword with 4 antenna ports, 2 transmission layers, and the TPMI being 14; for 3 transmission layers, the specific partial coherent codeword is related to the first codeword and the second codeword, and the specific partial coherent codeword is G, i.e.,

$$G = \begin{bmatrix} 1 & 0 & 0 \\ 1 & 0 & 0 \\ 0 & 1 & 1 \\ 0 & 1 & 1 \\ 1 & 0 & 0 \\ 1 & 0 & 0 \\ 0 & 1 & -1 \\ 0 & 1 & -1 \end{bmatrix}.$$

It should be noted that the codeword G may also have a coefficient, and the value of the coefficient is not specifically limited in the embodiments of the disclosure.

In the embodiments of the disclosure, for 3 transmission layers, the specific partial coherent codeword is related to the first codeword and the second codeword, the mapping relationship exists between the values corresponding to the ports in the first port group of the first layer of the specific partial coherent codeword and the values corresponding to the ports of the first layer of the second codeword, the mapping relationship exists between the values corresponding to the ports in the first port group of the second layer of the specific partial coherent codeword and the values corresponding to the ports of the second layer of the second codeword, and the mapping relationship exists between the values corresponding to the ports in the second port group of the third layer of the specific partial coherent codeword and the values corresponding to the ports of the first codeword;

in which the first port group is {0,1,4,5}, the second port group is {2,3,6,7}; the first codeword is the codeword with 4 antenna ports, 1 transmission layer, and the TPMI being 12, or the codeword corresponding to the minimum TPMI value in the TPMI subset corresponding to the fully coherent codebook with 4 antenna ports and 1 transmission layer; the second codeword is the codeword with 4 antenna ports, 2 transmission layers, and the TPMI being 14, or the codeword corresponding to the minimum TPMI value in the TPMI subset corresponding to the fully coherent codebook with 4 antenna ports and 2 transmission layers.

For example, the first codeword is the codeword with 4 antenna ports, 1 transmission layer, and the TPMI being 12 and the second codeword is the codeword with 4 antenna ports, 2 transmission layers, and the TPMI being 14; for 3 transmission layers, the specific partial coherent codeword is related to the first codeword and the second codeword, and the specific partial coherent codeword is *H*, i.e.,

$$H = \begin{bmatrix} 1 & 1 & 0 \\ 1 & 1 & 0 \\ 0 & 0 & 1 \\ 0 & 0 & 1 \\ 1 & -1 & 0 \\ 1 & -1 & 0 \\ 0 & 0 & 1 \\ 0 & 0 & 1 \end{bmatrix}.$$

It should be noted that the codeword H may also have a coefficient, and the value of the coefficient is not specifically limited in the embodiments of the disclosure.

In the embodiments of the disclosure, for 4 transmission layers, the specific partial coherent codeword is related to the second codeword, the mapping relationship exists between the values corresponding to the ports in the first port group of the first layer of the specific partial coherent codeword and the values corresponding to the ports of the first layer of the second codeword, a mapping relationship exists between the values corresponding to the ports in the first port group of the second layer of the specific partial coherent codeword and the values corresponding to the ports of the second layer of the second codeword, the mapping relationship exists between the values corresponding to the ports in the second port group of the third layer of the specific partial coherent codeword and the values corresponding to the ports of the first layer of the second codeword, and the mapping relationship exists between the values corresponding to the ports in the second port group of the fourth layer of the specific partial coherent codeword and the values corresponding to the ports of the second layer of the second codeword;

in which the first port group is {0,1,4,5}, the second port group is {2,3,6,7}; the second codeword is the codeword with 4 antenna ports, 2 transmission layers, and the TPMI being 14, or the codeword corresponding to the minimum TPMI value in the TPMI subset corresponding to the fully coherent codebook with 4 antenna ports and 2 transmission layers.

For example, the second codeword is the codeword with 4 antenna ports, 2 transmission layers, and the TPMI being 14; for 3 transmission layers, the specific partial coherent codeword is related to the second codeword, and the specific partial coherent codeword is $I$, i.e.,

$$ I = \begin{bmatrix} 1 & 1 & 0 & 0 \\ 1 & 1 & 0 & 0 \\ 0 & 0 & 1 & 1 \\ 0 & 0 & 1 & 1 \\ 1 & -1 & 0 & 0 \\ 1 & -1 & 0 & 0 \\ 0 & 0 & 1 & -1 \\ 0 & 0 & 1 & -1 \end{bmatrix}. $$

It should be noted that the codeword $I$ may also have a coefficient, and the value of the coefficient is not specifically limited in the embodiments of the disclosure.

In the embodiments of the disclosure, for 4 transmission layers, the specific partial coherent codeword is related to the third codeword, the mapping relationship exists between the values corresponding to the ports of the third codeword and the values corresponding to the ports in the third port group of the first layer, or in the fourth port group of the second layer, or in the fifth port group of the third layer, or in the sixth port group of the fourth layer of the specific partial coherent codeword;

in which the third port group is {0, 4}, the fourth port group is {1, 5}, the fifth port group is {2, 6}, and the sixth port group is {3, 7}; the third codeword is the codeword with 2 antenna ports, 1 transmission layer, and the TPMI being 2, or the codeword corresponding to the minimum TPMI value in the TPMI subset corresponding to the fully coherent codebook with 2 antenna ports and 1 transmission layer.

For example, the third codeword is the codeword with 2 antenna ports, 1 transmission layer, and the TPMI being 2; for 4 transmission layers, the specific partial coherent codeword is related to the third codeword, and the specific partial coherent codeword is $J$, i.e.,

$$ J = \begin{bmatrix} 1 & 0 & 0 & 0 \\ 0 & 1 & 0 & 0 \\ 0 & 0 & 1 & 0 \\ 0 & 0 & 0 & 1 \\ 1 & 0 & 0 & 0 \\ 0 & 1 & 0 & 0 \\ 0 & 0 & 1 & 0 \\ 0 & 0 & 0 & 1 \end{bmatrix}. $$

It should be noted that the codeword $J$ may also have a coefficient, and the value of the coefficient is not specifically limited in the embodiments of the disclosure.

In the embodiments of the disclosure, for 5 transmission layers, the specific partial coherent codeword is related to the second codeword and the fourth codeword, the mapping relationship exists between the values corresponding to the ports in the first port group of the first layer of the specific partial coherent codeword and the values corresponding to the ports of the first layer of the second codeword, the mapping relationship exists between the values corresponding to the ports in the first port group of the second layer of the specific partial coherent codeword and the values corresponding to the ports of the second layer of the second codeword, the mapping relationship exists between the values corresponding to the ports in the second port group of the third layer of the specific partial coherent codeword and the values corresponding to the ports of the first layer of the fourth codeword, the mapping relationship exists between the values corresponding to the ports in the second port group of the fourth layer of the specific partial coherent codeword and the values corresponding to the ports of the second layer of the fourth codeword, and the mapping relationship exists between the values corresponding to the ports in the second port group of the fifth layer of the specific partial coherent codeword and the values corresponding to the ports of the third layer of the fourth codeword;

in which the first port group is {0, 1, 4, 5} and the second port group is {2, 3, 6, 7}; the second codeword is the codeword with 4 antenna ports, 2 transmission layers and the TPMI being 14, or the codeword corresponding to the minimum TPMI value in the TPMI subset corresponding to the fully coherent codebook with 4 antenna ports and 2 transmission layers; the fourth codeword is the codeword with 4 antenna ports, 3 transmission layers and the TPMI being 3, or the codeword corresponding to the minimum TPMI value in the TPMI subset corresponding to the fully coherent codebook with 4 antenna ports and 3 transmission layers.

For example, the second codeword is the codeword with 4 antenna ports, 2 transmission layers and the TPMI being 14 and the fourth codeword is the codeword with 4 antenna ports, 3 transmission layers and the TPMI being 3; for 5 transmission layers, the specific partial coherent codeword is related to the second codeword and the fourth codeword, and the specific partial coherent codeword is $M$, i.e.,

$$M = \begin{bmatrix} 1 & 1 & 0 & 0 & 0 \\ 1 & 1 & 0 & 0 & 0 \\ 0 & 0 & 1 & 1 & 1 \\ 0 & 0 & 1 & -1 & 1 \\ 1 & -1 & 0 & 0 & 0 \\ 1 & -1 & 0 & 0 & 0 \\ 0 & 0 & 1 & 1 & -1 \\ 0 & 0 & 1 & -1 & -1 \end{bmatrix}.$$

It should be noted that the codeword $M$ may also have a coefficient, and the value of the coefficient is not specifically limited in the embodiments of the disclosure.

In the embodiments of the disclosure, for 5 transmission layers, the specific partial coherent codeword is related to the second codeword and the fourth codeword, the mapping relationship exists between the values corresponding to the ports in the first port group of the first layer of the specific partial coherent codeword and the values corresponding to the ports of the first layer of the fourth codeword, the mapping relationship exists between the values corresponding to the ports in the first port group of the second layer of the specific partial coherent codeword and the values corresponding to the ports of the second layer of the fourth codeword, the mapping relationship exists between the values corresponding to the ports in the first port group of the third layer of the specific partial coherent codeword and the values corresponding to the ports of the third layer of the fourth codeword, the mapping relationship exists between the values corresponding to the ports in the second port group of the fourth layer of the specific partial coherent codeword and the values corresponding to the ports of the first layer of the second codeword, and the mapping relationship exists between the values corresponding to the ports in the second port group of the fifth layer of the specific partial coherent codeword and the values corresponding to the ports of the second layer of the second codeword;

in which the first port group is {0, 1, 4, 5} and the second port group is {2, 3, 6, 7}; the second codeword is the codeword with 4 antenna ports, 2 transmission layers and the TPMI being 14, or the codeword corresponding to the minimum TPMI value in the TPMI subset corresponding to the fully coherent codebook with 4 antenna ports and 2 transmission layers; the fourth codeword is the codeword with 4 antenna ports, 3 transmission layers and the TPMI being 3, or the codeword corresponding to the minimum TPMI value in the TPMI subset corresponding to the fully coherent codebook with 4 antenna ports and 3 transmission layers.

For example, the second codeword is the codeword with 4 antenna ports, 2 transmission layers and the TPMI being 14 and the fourth codeword is the codeword with 4 antenna ports, 3 transmission layers and the TPMI being 3; for 5 transmission layers, the specific partial coherent codeword is related to the second codeword and the fourth codeword, and the specific partial coherent codeword is $N$, i.e.,

$$N = \begin{bmatrix} 1 & 1 & 1 & 0 & 0 \\ 1 & -1 & 1 & 0 & 0 \\ 0 & 0 & 0 & 1 & 1 \\ 0 & 0 & 0 & 1 & 1 \\ 1 & 1 & -1 & 0 & 0 \\ 1 & -1 & -1 & 0 & 0 \\ 0 & 0 & 0 & 1 & -1 \\ 0 & 0 & 0 & 1 & -1 \end{bmatrix}.$$

It should be noted that the codeword N may also have a coefficient, and the value of the coefficient is not specifically limited in the embodiments of the disclosure.

In the embodiments of the disclosure, for 6 transmission layers, the specific partial coherent codeword is related to the fourth codeword, the mapping relationship exists between the values corresponding to the ports in the first port group of the first layer of the specific partial coherent codeword and the values corresponding to the ports of the first layer of the fourth codeword, the mapping relationship exists between the values corresponding to the ports in the first port group of the second layer of the specific partial coherent codeword and the values corresponding to the ports of the second layer of the fourth codeword, the mapping relationship exists between the values corresponding to the ports in the first port group of the third layer of the specific partial coherent codeword and the values corresponding to the ports of the third layer of the fourth codeword, the mapping relationship exists between the values corresponding to the ports in the second port group of the fourth layer of the specific partial coherent codeword and the values corresponding to the ports of the first layer of the fourth codeword, the mapping relationship exists between the values corresponding to the ports in the second port group of the fifth layer of the specific partial coherent codeword and the values corresponding to the ports of the second layer of the fourth codeword, and the mapping relationship exists between the values corresponding to the ports in the second port group of the sixth layer of the specific partial coherent codeword and the values corresponding to the ports of the third layer of the fourth codeword;

in which the first port group is {0, 1, 4, 5} and the second port group is {2, 3, 6, 7}; the fourth codeword is the codeword with 4 antenna ports, 3 transmission layers and the TPMI being 3, or the codeword corresponding to the minimum TPMI value in the TPMI subset corresponding to the fully coherent codebook with 4 antenna ports and 3 transmission layers.

For example, the fourth codeword is the codeword with 4 antenna ports, 3 transmission layers and the TPMI being 3; for 6 transmission layers, the specific partial coherent codeword is related to the fourth codeword, and the specific partial coherent codeword is O, i.e.,

$$O = \begin{bmatrix} 1 & 1 & 1 & 0 & 0 & 0 \\ 1 & -1 & 1 & 0 & 0 & 0 \\ 0 & 0 & 0 & 1 & 1 & 1 \\ 0 & 0 & 0 & 1 & -1 & 1 \\ 1 & 1 & -1 & 0 & 0 & 0 \\ 1 & -1 & -1 & 0 & 0 & 0 \\ 0 & 0 & 0 & 1 & 1 & -1 \\ 0 & 0 & 0 & 1 & -1 & -1 \end{bmatrix}.$$

It should be noted that the codeword O may also have a coefficient, and the value of the coefficient is not specifically limited in the embodiments of the disclosure.

In the embodiments of the disclosure, for 7 transmission layers, the specific partial coherent codeword is related to the fourth codeword and the fifth codeword, the mapping relationship exists between the values corresponding to the ports in the first port group of the first layer of the specific partial coherent codeword and the values corresponding to the ports of the first layer of the fourth codeword, the mapping relationship exists between the values corresponding to the ports in the first port group of the second layer of the specific partial coherent codeword and the values corresponding to the ports of the second layer of the fourth codeword, the mapping relationship exists between the values corresponding to the ports in the first port group of the third layer of the specific partial coherent codeword and the values corresponding to the ports of the third layer of the fourth codeword, the mapping relationship exists between the values corresponding to the ports in the second port group of the fourth layer of the specific partial coherent codeword and the values corresponding to the ports of the first layer of the fifth codeword, the mapping relationship exists between the values corresponding to the ports in the second port group of the fifth layer of the specific partial coherent codeword and the values corresponding to the ports of the second layer of the fifth codeword, the mapping relationship exists between the values corresponding to the ports in the second port group of the sixth layer of the specific partial coherent codeword and the values corresponding to the ports of the third layer of the fifth codeword, and the mapping relationship exists between the values corresponding to the ports in the second port group of the seventh layer of the specific partial coherent codeword and the values corresponding to the ports of the fourth layer of the fifth codeword;

in which the first port group is {0, 1, 4, 5} and the second port group is {2, 3, 6, 7}; the fourth codeword is the codeword with 4 antenna ports, 3 transmission layers and the TPMI being 3, or the codeword corresponding to the minimum TPMI value in the TPMI subset corresponding to the fully coherent codebook with 4 antenna ports and 3 transmission layers; the fifth codeword is the codeword with 4 antenna ports, 4 transmission layers and the TPMI being 3, or the codeword corresponding to the minimum TPMI value in the TPMI subset corresponding to the fully coherent codebook with 4 antenna ports and 4 transmission layers.

For example, the fourth codeword is the codeword with 4 antenna ports, 3 transmission layers and the TPMI being 3 and the fifth codeword is the codeword with 4 antenna ports, 4 transmission layers and the TPMI being 3; for 7 transmission layers, the specific partial coherent codeword is related to the fourth codeword and the fifth codeword, and the specific partial coherent codeword is $P$, i.e.,

$$P = \begin{bmatrix} 1 & 1 & 1 & 0 & 0 & 0 & 0 \\ 1 & -1 & 1 & 0 & 0 & 0 & 0 \\ 0 & 0 & 0 & 1 & 1 & 1 & 1 \\ 0 & 0 & 0 & 1 & -1 & 1 & -1 \\ 1 & 1 & -1 & 0 & 0 & 0 & 0 \\ 1 & -1 & -1 & 0 & 0 & 0 & 0 \\ 0 & 0 & 0 & 1 & 1 & -1 & -1 \\ 0 & 0 & 0 & 1 & -1 & -1 & 1 \end{bmatrix}.$$

It should be noted that the codeword $P$ may also have a coefficient, and the value of the coefficient is not specifically limited in the embodiments of the disclosure.

In the embodiments of the disclosure, for 7 transmission layers, the specific partial coherent codeword is related to the fourth codeword and the fifth codeword, the mapping relationship exists between the values corresponding to the ports in the first port group of the first layer of the specific partial coherent codeword and the values corresponding to the ports of the first layer of the fifth codeword, the mapping relationship exists between the values corresponding to the ports in the first port group of the second layer of the specific partial coherent codeword and the values corresponding to the ports of the second layer of the fifth codeword, the mapping relationship exists between the values corresponding to the ports in the first port group of the third layer of the specific partial coherent codeword and the values corresponding to the ports of the third layer of the fifth codeword, the mapping relationship exists between the values corresponding to the ports in the first port group of the fourth layer of the specific partial coherent codeword and the values corresponding to the ports of the fourth layer of the fifth codeword, the mapping relationship exists between the values corresponding to the ports in the second port group of the fifth layer of the specific partial coherent codeword and the values corresponding to the ports of the first layer of the fourth codeword, the mapping relationship exists between the values corresponding to the ports in the second port group of the sixth layer of the specific partial coherent codeword and the values corresponding to the ports of the second layer of the fourth codeword, and the mapping relationship exists between the values corresponding to the ports in the second port group of the seventh layer of the specific partial coherent codeword and the values corresponding to the ports of the third layer of the fourth codeword;

in which the first port group is {0, 1, 4, 5} and the second port group is {2, 3, 6, 7}; the fourth codeword is the codeword with 4 antenna ports, 3 transmission layers and the TPMI being 3, or the codeword corresponding to the minimum TPMI value in the TPMI subset corresponding to the fully coherent codebook with 4 antenna ports and 3 transmission layers; the fifth codeword is the codeword with 4 antenna ports, 4 transmission layers and the TPMI being 3, or the codeword corresponding to the minimum TPMI value in the TPMI subset corresponding to the fully coherent codebook with 4 antenna ports and 4 transmission layers.

For example, the fourth codeword is the codeword with 4 antenna ports, 3 transmission layers and the TPMI being 3 and the fifth codeword is the codeword with 4 antenna ports, 4 transmission layers and the TPMI being 3; for 7 transmission layers, the specific partial coherent codeword is related to the fourth codeword and the fifth codeword, and the specific partial coherent codeword is Q, i.e.,

$$Q = \begin{bmatrix} 1 & 1 & 1 & 1 & 0 & 0 & 0 \\ 1 & -1 & 1 & -1 & 0 & 0 & 0 \\ 0 & 0 & 0 & 0 & 1 & 1 & 1 \\ 0 & 0 & 0 & 0 & 1 & -1 & 1 \\ 1 & 1 & -1 & -1 & 0 & 0 & 0 \\ 1 & -1 & -1 & 1 & 0 & 0 & 0 \\ 0 & 0 & 0 & 0 & 1 & 1 & -1 \\ 0 & 0 & 0 & 0 & 1 & -1 & -1 \end{bmatrix}.$$

It should be noted that the codeword Q may also have a coefficient, and the value of the coefficient is not specifically limited in the embodiments of the disclosure.

In the embodiments of the disclosure, for 5 transmission layers, the specific partial coherent codeword is related to the third codeword and the sixth codeword, the mapping relationship exists between the values corresponding to the ports of the third codeword and the values corresponding to the in the third port group of the first layer, or in the fourth port group of the second layer, or in the sixth port group of the fifth layer ports of the specific partial coherent codeword; the mapping relationship exists between the values corresponding to the ports in the fifth port group of the third layer of the specific partial coherent codeword and the values corresponding to the ports of the first layer of the sixth codeword, and the mapping relationship exists between the values corresponding to the ports in the fifth port group of the fourth layer of the specific partial coherent codeword and the values corresponding to the ports of the second layer of the sixth codeword; in which the third port group is {0, 4}, the fourth port group is {1 5}, the fifth port group is {2, 6}, and the sixth port group is {3, 7}; the third codeword is the codeword with 2 antenna ports, 1 transmission layer and the TPMI being 2, or the codeword corresponding to the minimum TPMI value in the TPMI subset corresponding to the fully coherent codebook with 2 antenna ports and 1 transmission layer; the sixth codeword is the codeword with 2 antenna ports, 2 transmission layers and the TPMI being 1, or the codeword corresponding to the minimum TPMI value in the TPMI subset corresponding to the fully coherent codebook with 2 antenna ports and 2 transmission layers.

For example, the third codeword is the codeword with 2 antenna ports, 1 transmission layer and the TPMI being 2 and the sixth codeword is the codeword with 2 antenna ports, 2 transmission layers and the TPMI being 1; for 5 transmission layers, the specific partial coherent codeword is related to the third codeword and the sixth codeword, and the specific partial coherent codeword is R, i.e.,

$$R = \begin{bmatrix} 1 & 0 & 0 & 0 & 0 \\ 0 & 1 & 0 & 0 & 0 \\ 0 & 0 & 1 & 1 & 0 \\ 0 & 0 & 0 & 0 & 1 \\ 1 & 0 & 0 & 0 & 0 \\ 0 & 1 & 0 & 0 & 0 \\ 0 & 0 & 1 & -1 & 0 \\ 0 & 0 & 0 & 0 & 1 \end{bmatrix}.$$

It should be noted that the codeword R may also have a coefficient, and the value of the coefficient is not specifically limited in the embodiments of the disclosure.

In the embodiments of the disclosure, for 6 transmission layers, the specific partial coherent codeword is related to the third codeword and the sixth codeword, the mapping relationship exists between the values corresponding to the ports in the third port group of the first layer of the specific partial coherent codeword and the values corresponding to the ports of the first layer of the sixth codeword, the mapping relationship exists between the values corresponding to the ports in the third port group of the second layer of the specific partial coherent codeword and the values corresponding to the ports of the second layer of the sixth codeword, the mapping relationship exists between the values corresponding to the ports in the fourth port group of the third layer of the specific partial coherent codeword and the values corresponding to the ports of the third codeword, the mapping relationship exists between the values corresponding to the ports in the fifth port group of the fourth layer of the specific partial coherent codeword and the values corresponding to the ports of the first layer of the sixth codeword, the mapping relationship exists between the values corresponding to the ports in the fifth port group of the fifth layer of the specific partial coherent codeword and the values corresponding to the ports of the first layer of the sixth codeword, and the mapping relationship exists between the values corresponding to the ports in the sixth port group of the sixth layer of the specific partial coherent codeword and the values corresponding to the ports of the third codeword; or

in which the third port group is {0, 4}, the fourth port group is {1 5}, the fifth port group is {2, 6}, and the sixth port group is {3, 7}; the third codeword is the codeword with 2 antenna ports, 1 transmission layer and the TPMI being 2, or the codeword corresponding to the minimum TPMI value in the TPMI subset corresponding to the fully coherent codebook with 2 antenna ports and 1 transmission layer; the sixth codeword is the codeword with 2 antenna ports, 2 transmission layers and the TPMI being 1, or the codeword corresponding to the minimum TPMI value in the TPMI subset corresponding to the fully coherent codebook with 2 antenna ports and 2 transmission layers.

For example, the third codeword is the codeword with 2 antenna ports, 1 transmission layer and the TPMI being 2 and the sixth codeword is the codeword with 2 antenna ports, 2 transmission layers and the TPMI being 1; for 6 transmission layers, the specific partial coherent codeword is related to the third codeword and the sixth codeword, and the specific partial coherent codeword is S, i.e.,

$$S = \begin{bmatrix} 1 & 1 & 0 & 0 & 0 & 0 \\ 0 & 0 & 1 & 0 & 0 & 0 \\ 0 & 0 & 0 & 1 & 1 & 0 \\ 0 & 0 & 0 & 0 & 0 & 1 \\ 1 & -1 & 0 & 0 & 0 & 0 \\ 0 & 0 & 1 & 0 & 0 & 0 \\ 0 & 0 & 0 & 1 & -1 & 0 \\ 0 & 0 & 0 & 0 & 0 & 1 \end{bmatrix}.$$

It should be noted that the codeword S may also have a coefficient, and the value of the coefficient is not specifically limited in the embodiments of the disclosure.

In the embodiments of the disclosure, for 7 transmission layers, the specific partial coherent codeword is related to the third codeword and the sixth codeword, the mapping relationship exists between the values corresponding to the ports in the third port group of the first layer of the specific partial coherent codeword and the values corresponding to the ports of the first layer of the sixth codeword, the mapping relationship exists between the values corresponding to the ports in the third port group of the second layer of the specific partial coherent codeword and the values corresponding to the ports of the second layer of the sixth codeword, the mapping relationship exists between the values corresponding to the ports in the fourth port group of the third layer of the specific partial coherent codeword and the values corresponding to the ports of the third codeword, the mapping relationship exists between the values corresponding to the ports in the fifth port group of the fourth layer of the specific partial coherent codeword and the values corresponding to the ports of the first layer of the sixth codeword, the mapping relationship exists between the values corresponding to the ports in the fifth port group of the fifth layer of the specific partial coherent codeword and the values corresponding to the ports of the second layer of the sixth codeword, the mapping relationship exists between the values corresponding to the ports in the sixth port group of the sixth layer of the specific partial coherent codeword and the values corresponding to the ports of the first layer of the sixth codeword, and the mapping relationship exists between the values corresponding to the ports in the sixth port group of the seventh layer of the specific partial coherent codeword and the values corresponding to the ports of the second layer of the sixth codeword;

in which the third port group is {0, 4}, the fourth port group is {1 5}, the fifth port group is {2, 6}, and the sixth port group is {3, 7}; the third codeword is the codeword with 2 antenna ports, 1 transmission layer and the TPMI being 2, or the codeword corresponding to the minimum TPMI value in the TPMI subset corresponding to the fully coherent codebook with 2 antenna ports and 1 transmission layer; the sixth codeword is the codeword with 2 antenna ports, 2 transmission layers and the TPMI being 1, or the codeword corresponding to the minimum TPMI value in the TPMI subset corresponding to the fully coherent codebook with 2 antenna ports and 2 transmission layers.

For example, the third codeword is the codeword with 2 antenna ports, 1 transmission layer and the TPMI being 2 and the sixth codeword is the codeword with 2 antenna ports, 2 transmission layers and the TPMI being 1; for 7 transmission layers, the specific partial coherent codeword is related to the third codeword and the sixth codeword, and the specific partial coherent codeword is $T$, i.e.,

$$T = \begin{bmatrix} 1 & 1 & 0 & 0 & 0 & 0 & 0 \\ 0 & 0 & 1 & 0 & 0 & 0 & 0 \\ 0 & 0 & 0 & 1 & 1 & 0 & 0 \\ 0 & 0 & 0 & 0 & 0 & 1 & 1 \\ 1 & -1 & 0 & 0 & 0 & 0 & 0 \\ 0 & 0 & 1 & 0 & 0 & 0 & 0 \\ 0 & 0 & 0 & 1 & -1 & 0 & 0 \\ 0 & 0 & 0 & 0 & 0 & 1 & -1 \end{bmatrix}.$$

It should be noted that the codeword T may also have a coefficient, and the value of the coefficient is not specifically limited in the embodiments of the disclosure.

In some embodiments, the mapping relationship may be a relationship of one-to-one correspondence.

In the embodiments of the disclosure, the case of "for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword" is taken as an example for illustration.

In this case, for 2 transmission layers, the mapping relationship exists between the values corresponding to the ports in the first port group of the first layer of the specific partial coherent codeword and the values corresponding to the ports of the first codeword. The mapping relationship may mean that the values corresponding to the ports in the first port group of the first layer of the specific partial coherent codeword have one-to-one correspondence with the values corresponding to the ports of the first codeword.

For example, the values corresponding to the ports in the first port group of the first layer of the specific partial coherent codeword (i.e., values corresponding to the ports in {0,1,4,5}) have one-to-one correspondence with the values corresponding to the ports of the first codeword. For example, when the first codeword is $\dfrac{1}{2}\begin{bmatrix} 1 \\ 1 \\ 1 \\ 1 \end{bmatrix}$ , the values corresponding

to the ports of the first codeword are all 1, and thus the values corresponding to the ports in the first port group {0,1,4,5} the first layer of the specific partial coherent codeword are all 1.

It may be understood that the values corresponding to the ports in the first port group {0,1,4,5} of the first layer of the specific partial coherent codeword are all 1, that is, values in rows 1, 2, 5, and 6 in a first column of a matrix corresponding to the codeword $C$ are 1 respectively.

In this case, for 2 transmission layers, the mapping relationship exists between the values corresponding to the ports in the second port group of the second layer of the specific partial coherent codeword and the values corresponding to the ports of the first codeword. The mapping relationship may mean that the values corresponding to the ports in the second port group of the second layer of the specific partial coherent codeword have one-to-one correspondence with the values corresponding to the ports of the first codeword.

For example, the values corresponding to the ports in the second port group of the second layer of the specific partial coherent codeword (i.e., values corresponding to the ports in {2,3,6,7}) have one-to-one correspondence with the values corresponding to the ports of the first codeword. For example, when the first codeword is $\dfrac{1}{2}\begin{bmatrix} 1 \\ 1 \\ 1 \\ 1 \end{bmatrix}$ , the values

corresponding to the ports of the first codeword are all 1, and thus the values corresponding to the ports in the second port group {2,3,6,7} the second layer of the specific partial coherent codeword are all 1.

It may be understood that the values corresponding to the ports in the second port group {2,3,6,7} of the second layer of the specific partial coherent codeword are all 1, that is, values in rows 3, 4, 7, and 8 in a second column of a matrix corresponding to the codeword $C$ are 1 respectively.

At **S203,** the network device sends indication information to the terminal.

In some embodiments, the indication information indicates the codebook configured by the network device for the terminal.

In this embodiment of the disclosure, the network device may send the indication information to the terminal, and the indication information may indicate the codebook configured for the terminal.

In some embodiments, the network device may determine the codebook for the terminal and send the indication information to the terminal, so as to indicate the codebook configured for the terminal.

In some embodiments, the network device may determine the codebook for the terminal based on the capability information of the terminal, and send the indication information to the terminal, so as to indicate the codebook configured for the terminal.

In some embodiments, the at least one codeword in the codebook supports the full-power uplink transmission by the terminal.

In some embodiments, the at least one codeword in the codebook supports the full-power transmission of the uplink signal by the terminal.

In some embodiments, the at least one codeword in the codebook supports the full-power transmission of the uplink channel by the terminal.

In this embodiment of the disclosure, the network device may send the indication information to the terminal, the indication information indicates the codebook configured by the network device for the terminal, and the at least one codeword in the codebook supports the full-power uplink transmission by the terminal.

In some embodiments, the network device may reuse an existing signaling or message to send the indication information to the terminal, or may also use a new signaling or message to send the indication information to the terminal.

For example, the network device sends an RRC signaling to the terminal, and the RRC signaling includes the indication information.

For example, the terminal receives the RRC signaling sent from the network device, and the RRC signaling includes the indication information.

In some embodiments, the codebook includes at least one of:

an 8-port non-coherent codebook with a first value of transmission layers, and one 8-port fully coherent codeword with the first value of transmission layers, in which the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, in which the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, in which the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, in which the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, in which the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, in which the terminal supports 8-port non-coherent transmission with the sixth value of transmission layers, and the sixth value is at least one of 2 to 7.

In some embodiments, for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, a first parameter, a second parameter, a third parameter and a fourth parameter are all 0; or

for 3 or 4 transmission layers, the specific 8-port fully coherent codeword is a codeword determined when an antenna configuration is a second configuration, a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, a first parameter, a second parameter and a third parameter are all 0; or

for any one of 5 to 7 transmission layers, the specific 8-port fully coherent codeword is a codeword determined when an antenna configuration is a second configuration, a first parameter, a second parameter and a third parameter are all 0;

in which the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

the first configuration is that, in one polarization direction, a number of antenna ports in the horizontal dimension is 4 and a number of antenna ports in the vertical dimension is 1; and

the second configuration is that, in one polarization direction, a number of antenna ports in the horizontal dimension is 2 and a number of antenna ports in the vertical dimension is 2.

In some embodiments, for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

In some embodiments, for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword; or

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or

for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword;

for 6 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

in which the first port group is {0, 1, 4, 5} and the second port group is {2, 3, 6, 7}, the third port group is {0, 4}, the fourth port group is {1, 5}, the fifth port group is {2, 6}, and the sixth port group is {3, 7};

the first codeword is a codeword with 4 antenna ports, 1 transmission layer and a TPMI being 12, or a codeword corresponding to a minimum TPMI value in a TPMI subset corresponding to a fully coherent codebook with 4 antenna ports and 1 transmission layer;

the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers;

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

It should be noted that, for related descriptions of the contents included in the above codewords, reference may be made to the related descriptions of the contents included in the codewords in S202, which are not repeated herein.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

In some embodiments, the terms such as "codebook", "codeword" and "precoding matrix" may be used interchangeably. For example, a codebook may be a collection of one or more codewords/precoding matrices.

In some embodiments, the terms such as "uplink", "physical uplink" may be used interchangeably. The terms such as "downlink", "physical downlink" may be used interchangeably. The terms such as "side", "sidelink", "side communication", "sidelink communication", "direct", "direct link", "direct communication", "direct link communication" may be used interchangeably.

In some embodiments, the terms such as "PUSCH", "uplink (UL) data" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bidirectionally transmit", "send and/or receive" or the like may be used interchangeably.

In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as certain A, a A, any A, or first A, etc., but is not limited herein.

The communication method in the embodiments of the disclosure may include at least one of S201 to S203. For example, S201 may be implemented as an independent embodiment, S202 may be implemented as an independent embodiment, S203 may be implemented as an independent embodiment, S201 and S202 may be implemented as an independent embodiment, and S202 and S203 may be implemented as an independent embodiment, which is not limited herein.

In some embodiments, S201 and S202 are optional, and one or more of the steps may be omitted or substituted in different embodiments.

In some embodiments, S201 is optional, and one or more of the steps may be omitted or substituted in different embodiments.

In some embodiments, reference to other optional implementations described before or after the description corresponding to FIG. 2 may be made.

FIG. 3A is a flowchart illustrating a method for indicating a codebook according to an embodiment of the disclosure. As shown in FIG. 3A, embodiments of the disclosure relate to a method for indicating a codebook. The method is performed by a terminal and includes the following step S301A.

At **S301A,** a codebook is determined.

In embodiments of the disclosure, the terminal supports 8-port non-coherent transmission.

In embodiments of the disclosure, the terminal supports the 8-port non-coherent transmission with at least one of 1 to 7 transmission layers.

In some embodiments, the terminal supports 8-port non-coherent transmission with 1 transmission layer.

In some embodiments, the terminal supports 8-port non-coherent transmission with 2 transmission layers.

In some embodiments, the terminal supports 8-port non-coherent transmission with 3 transmission layers.

In some embodiments, the terminal supports 8-port non-coherent transmission with 4 transmission layers.

In some embodiments, the terminal supports 8-port non-coherent transmission with 5 transmission layers.

In some embodiments, the terminal supports 8-port non-coherent transmission with 6 transmission layers.

In some embodiments, the terminal supports 8-port non-coherent transmission with 7 transmission layers.

In this embodiment of the disclosure, the terminal determines the codebook, in which at least one codeword in the codebook supports full-power uplink transmission by the terminal.

In some embodiments, the at least one codeword in the codebook supports full-power transmission of the uplink signal by the terminal.

In some embodiments, the at least one codeword in the codebook supports full-power transmission of the uplink channel by the terminal.

In this embodiment of the disclosure, the terminal determines the codebook and may use the at least one codeword in the codebook for transmission of an uplink signal or an uplink channel.

In some embodiments, the terminal determines a codebook agreed by a protocol.

In some embodiments, the terminal determines the codebook from upper layer(s).

In some embodiments, the terminal determines the codebook by processing.

In some embodiments, S301A is omitted, and the terminal autonomously implements the function indicated by the codebook, or the above function is default or preconfigured.

In some embodiments, the terminal receives indication information sent from a network device, in which the indication information indicates the codebook configured by the network device for the terminal, and the at least one codeword in the codebook supports the full-power uplink transmission by the terminal.

In some embodiments, determining the codebook by the terminal includes at least one of:

determining that the codebook is an 8-port non-coherent codebook with a first value of transmission layers to which one 8-port fully coherent codeword with the first value of transmission layers is added, in which the terminal supports 8-port non-coherent transmission with the first value of transmission layers, and the first value is at least one of 1 to 7;

determining that the codebook is an 8-port non-coherent codebook with a second value of transmission layers to which one specific 8-port fully coherent codeword with the second value of transmission layers is added, in which the terminal supports 8-port non-coherent transmission with the second value of transmission layers, and the second value is at least one of 1 to 7;

determining that the codebook is an 8-port non-coherent codebook with 1 transmission layer from which one 8-port non-coherent codeword with 1 transmission layer is deleted and to which one 8-port fully coherent codeword with 1 transmission layer is added, in which the terminal supports 8-port non-coherent transmission with 1 transmission layer;

determining that the codebook is an 8-port non-coherent codebook with 1 transmission layer from which one 8-port non-coherent codeword with 1 transmission layer is deleted and to which one specific 8-port fully coherent codeword with 1 transmission layer is added, in which the terminal supports the 8-port non-coherent transmission with 1 transmission layer;

determining that the codebook is an 8-port non-coherent codebook with a third value of transmission layers to which all 8-port fully coherent codewords with the third value of transmission layers are added, in which the terminal supports 8-port non-coherent transmission with the third value of transmission layers, and the third value is at least one of 1 to 7;

determining that the codebook is an 8-port non-coherent codebook with a fourth value of transmission layers to which one partial coherent codeword with the fourth value of transmission layers is added, in which the terminal supports 8-port non-coherent transmission with the fourth value of transmission layers, and the fourth value is at least one of 2 to 7;

determining that the codebook is an 8-port non-coherent codebook with a fifth value of transmission layers to which one specific partial coherent codeword with the fifth value of transmission layers is added, in which the terminal supports 8-port non-coherent transmission with the fifth value of transmission layers, and the fifth value is at least one of 2 to 7; or

determining that the codebook is an 8-port non-coherent codebook with a sixth value of transmission layers to which all partial coherent codewords with the sixth value of transmission layers are added, in which the terminal supports 8-port non-coherent transmission with the sixth value of transmission layers, and the sixth value is at least one of 2 to 7.

In some embodiments, the codebook includes at least one of:

an 8-port non-coherent codebook with a first value of transmission layers, and one 8-port fully coherent codeword with the first value of transmission layers, in which the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, in which the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, in which the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, in which the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, in which the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, in which the terminal supports 8-port non-coherent transmission with the sixth value of transmission layers, and the sixth value is at least one of 2 to 7.

It should be noted that, for related descriptions of the specific 8-port fully coherent codeword, the partial coherent codeword, and the specific partial coherent codeword, reference may be made to the related descriptions in the above embodiments, which are not repeated herein.

It should be noted that, for optional implementations of S301A, reference may be made to optional implementations of S203 in FIG. 2 and other related parts in embodiments associated with FIG. 2, which are not repeated herein.

By implementing the embodiments of the disclosure, the terminal obtains the codebook. The terminal supports the 8-port non-coherent transmission with at least one of 1 to 7 transmission layers, and the at least one codeword in the codebook supports the full-power uplink transmission by the terminal. Thus, the terminal may achieve the full-power uplink transmission, which may increase the transmission power of the terminal and improve the uplink transmission performance.

FIG. 3B is a flowchart illustrating a method for indicating a codebook according to an embodiment of the disclosure. As shown in FIG. 3B, embodiments of the disclosure relate to a method for indicating a codebook. The method includes the following steps S301B to S302B.

At **S301B,** a terminal sends capability information to a network device, in which the capability information indicates that the terminal supports 8-port non-coherent transmission with at least one of 1 to 7 transmission layers.

In this embodiment of the disclosure, the terminal may send the capability information to the network device. The capability information may indicate that the terminal supports the 8-port non-coherent transmission with at least one of 1 to 7 transmission layers.

It may be understood that the terminal supporting the 8-port non-coherent uplink transmission may mean that the terminal supports using an 8-port non-coherent codebook for uplink transmission.

For example, for the 8-port non-coherent codebook, all the antenna selection vectors or antenna selection matrices are adopted.

For example, only one non-zero value is present in each row of a matrix for any one codeword in the 8-port non-coherent codebook, e.g., only one 1 is present in each row.

It should be noted that, for optional implementations of S301B, reference may be made to optional implementations of S201 in FIG. 2 and other related parts in the embodiments associated with FIG. 2, which are not repeated herein.

At **S302B,** the terminal receives indication information sent from the network device, in which the indication information indicates a codebook configured by the network device for the terminal, and at least one codeword in the codebook supports full-power uplink transmission by the terminal.

In this embodiment of the disclosure, the terminal may receive the indication information sent from the network device. The indication information indicates the codebook configured by the network device for the terminal, and the at least one codeword in the codebook supports the full-power uplink transmission by the terminal. Thus, the terminal may achieve the full-power uplink transmission, which may increase the transmission power of the terminal and improve the uplink transmission performance.

In some embodiments, after sending the capability information to the network device, the terminal may receive the indication information sent from the network device.

It should be noted that, for optional implementations of S302B, reference may be made to optional implementations of S203 in FIG. 2 and other related parts in the embodiments associated with FIG. 2, which are not repeated herein.

The communication method involved in the embodiments of the disclosure may include at least one of S301B to S302B. For example, S302B may be implemented as an independent embodiment, which is not limited herein.

In some embodiments, S301B is optional, and one or more of the steps may be omitted or substituted in different embodiments.

By implementing the embodiments of the disclosure, the terminal sends the capability information to the network device, in which the capability information indicates that the terminal supports the 8-port non-coherent transmission with at least one of 1 to 7 transmission layers. The terminal receives the indication information sent from the network device, in which the indication information indicates the codebook configured by the network device for the terminal, and the at least one codeword in the codebook supports the full-power uplink transmission by the terminal. Thus, the terminal may achieve the full-power uplink transmission, which may increase the transmission power of the terminal and improve the uplink transmission performance.

FIG. 4A is a flowchart illustrating a method for indicating a codebook according to an embodiment of the disclosure. As shown in FIG. 4A, embodiments of the disclosure relate to a method for indicating a codebook. The method is performed by a network device and includes the following steps S401A to S402A.

At **S401A,** a codebook is determined.

In the embodiments of the disclosure, the network device determines the codebook, and at least one codeword in the codebook supports full-power uplink transmission by a terminal.

In some embodiments, the at least one codeword in the codebook supports full-power transmission of the uplink signal by the terminal.

In some embodiments, the at least one codeword in the codebook supports full-power transmission of the uplink channel by the terminal.

In the embodiments of the disclosure, the terminal supports the 8-port non-coherent transmission.

In some embodiments, the terminal supports the 8-port non-coherent transmission with at least one of 1 to 7 transmission layers.

In some embodiments, the terminal supports 8-port non-coherent transmission with 1 transmission layer.

In some embodiments, the terminal supports 8-port non-coherent transmission with 2 transmission layers.

In some embodiments, the terminal supports 8-port non-coherent transmission with 3 transmission layers.

In some embodiments, the terminal supports 8-port non-coherent transmission with 4 transmission layers.

In some embodiments, the terminal supports 8-port non-coherent transmission with 5 transmission layers.

In some embodiments, the terminal supports 8-port non-coherent transmission with 6 transmission layers.

In some embodiments, the terminal supports 8-port non-coherent transmission with 7 transmission layers.

In some embodiments, the network device may determine a codebook agreed by a protocol.

In some embodiments, the network device may determine the codebook from upper layer(s).

In some embodiments, the network device may determine the codebook by processing.

In some embodiments, the network device may determine the codebook for the terminal.

In some embodiments, the network device may determine the codebook based on a capability of the terminal. For example, the capability of the terminal includes that the terminal supports the 8-port non-coherent transmission with at least one of 1 to 7 transmission layers.

It should be noted that, for optional implementations of S401A, reference may be made to optional implementations of S202 in FIG. 2 and other related parts in the embodiments associated with FIG. 2, which are not repeated herein.

At **S402A,** the codebook is sent.

In some embodiments, the network device sends the codebook to the terminal, but is not limited herein, and may also send the codebook to other entities.

In some embodiments, the network device sends indication information to the terminal, in which the indication information indicates the codebook configured by the network device for the terminal, and the at least one codeword in the codebook supports the full-power uplink transmission by the terminal.

It should be noted that, for optional implementations of S402A, reference may be made to optional implementations of S203 in FIG. 2 and other related parts in the embodiments associated with FIG. 2, which are not repeated herein.

The communication method involved in the embodiments of the disclosure may include at least one of S401A to S402A. For example, S401A may be implemented as an independent embodiment, and S402A may be implemented as an independent embodiment, which is not limited herein.

In some embodiments, S401A is optional, and one or more of the steps may be omitted or substituted in different embodiments.

In some embodiments, S402A is optional, and one or more of the steps may be omitted or substituted in different embodiments.

By implementing the embodiments of the disclosure, the network device determines the codebook, in which the at least one codeword in the codebook supports full-power uplink transmission by the terminal, and the terminal supports the 8-port non-coherent transmission with at least one of 1 to 7 transmission layers. The network device sends the codebook. Thus, the terminal may achieve the full-power uplink transmission, which may increase the transmission power of the terminal and improve the uplink transmission performance.

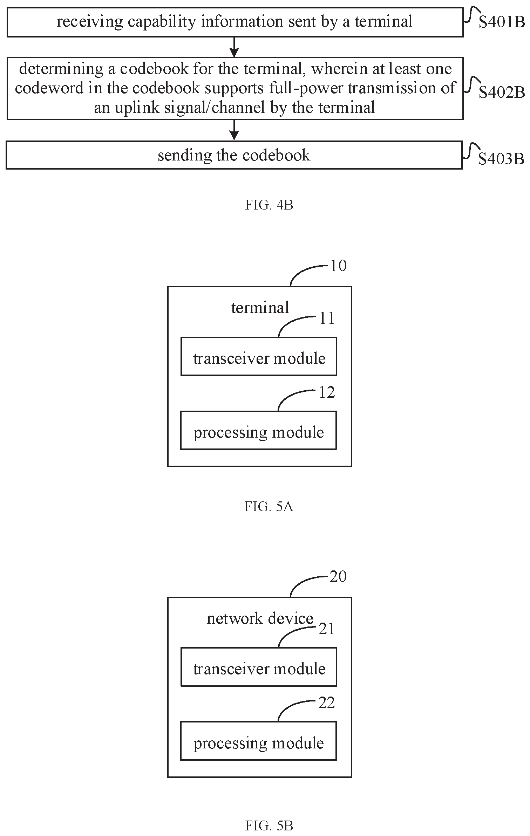

FIG. 4B is a flowchart illustrating a method for indicating a codebook according to an embodiment of the disclosure. As shown in FIG. 4B, embodiments of the disclosure relate to a method for indicating a codebook. The method is performed by a network device and includes the following steps S401B to S403B.

At **S401B,** capability information sent from a terminal is received.

In some embodiments, the capability information indicates that the terminal supports 8-port non-coherent transmission with at least one of 1 to 7 transmission layers.

In this embodiment of the disclosure, the network device may receive the capability information sent from the terminal. The capability information indicates that the terminal supports the 8-port non-coherent transmission with at least one of 1 to 7 transmission layers. Thus, the network device may determine that the terminal supports the 8-port non-coherent transmission with at least one of 1 to 7 transmission layers.

At **S402B,** a codebook is determined, in which at least one codeword in the codebook supports full-power uplink transmission by the terminal.

It should be noted that, for optional implementations of S402B, reference may be made to optional implementations of S202 in FIG. 2 and other related parts in the embodiments associated with FIG. 2, which are not repeated herein.

At **S403B,** the codebook is sent.

It should be noted that for optional implementations of S403B, reference may be made to optional implementations of S203 in FIG. 2 and other related parts in the embodiments associated with FIG. 2, which are not repeated herein.

The communication method involved in the embodiments of the disclosure may include at least one of S401B to S403B. For example, S401B may be implemented as an independent embodiment, S402B may be implemented as an independent embodiment, and S403B may be implemented as an independent embodiment, which is not limited herein.

The communication method involved in the embodiments of the disclosure may include at least one of S401B to S403B. For example, S401B may be implemented as an independent embodiment, S402B may be implemented as an independent embodiment, S403B may be implemented as an independent embodiment, S401B and S402B may be implemented as an independent embodiment, and S402B and S403B may be implemented as an independent embodiment, which is not limited herein.

In some embodiments, S401B and S402B are optional, and one or more of the steps may be omitted or substituted in different embodiments.

In some embodiments, S401B is optional, and one or more of the steps may be omitted or substituted in different embodiments.

By implementing the embodiments of the disclosure, the network device receives the capability information sent from the terminal, in which the capability information indicates that the terminal supports the 8-port non-coherent transmission with at least one of 1 to 7 transmission layers; the network device determines the codebook, in which the at least one codeword in the codebook supports full-power uplink transmission by the terminal; and the network device sends the codebook. Thus, the terminal may achieve the full-power uplink transmission, which may increase the transmission power of the terminal and improve the uplink transmission performance.

For ease of understanding embodiments of the disclosure, the following exemplary embodiments are provided.

In an exemplary embodiment, in the case that the number of transmission layers (or rank) is equal to 1, a terminal uses a codebook for transmission of an uplink signal or an uplink channel. The codebook includes at least one of Option 1, Option 2, or Option 3.

Option 1: one 8-port fully coherent codeword is introduced into an 8-port non-coherent codebook.

It may be understood that the bit overhead used for configuring, by the network device and for the terminal, an 8-port non-coherent codebook with the rank being 1 is 3 bits, and in a case that the one 8-port fully coherent codeword is introduced into the 8-port non-coherent codebook, the bit overhead used for configuring, by the network device and for the terminal, the 8-port non-coherent codebook and the one 8-port fully coherent codeword may increase to 4 bits.

Option 1-1: for different (N1, N2) antenna configurations, a fully coherent codeword with the smallest index value is introduced:

when (N1,N2)=(4,1), a codeword (e.g., codeword A) corresponding to 'i1,1'=0, 'i1,2'=0 and 'i2'=0 is selected;
when (N1,N2)=(2,2), a codeword (e.g. codeword A) corresponding to 'i1,1'=0, 'i1,2'=0 and 'i2'=0 is selected.

Option 1-2: for different (N1, N2) antenna configurations, a fully coherent codeword with an arbitrary index value is introduced.

Option 2: one 8-port fully coherent codeword is introduced into the 8-port non-coherent codebook and any codeword is deleted from the 8-port non-coherent codebook.

It may be understood that the bit overhead used for configuring, by the network device and for the terminal, an 8-port non-coherent codebook with the rank being 1 is 3 bits, and in a case that the one 8-port fully coherent codeword is introduced into the 8-port non-coherent codebook, the bit overhead used for configuring, by the network device and for the terminal, the 8-port non-coherent codebook from which one codeword is deleted and the one 8-port fully coherent codeword may maintain unchanged, i.e., 3 bits.

Option 3: all 8-port fully coherent codewords are introduced into the 8-port non-coherent codebook.

In an exemplary embodiment, the number of transmission layers (or rank) is 2, and the terminal uses a codebook to transmit an uplink signal or an uplink channel. The codebook includes at least one of Option 1, Option 2, Option 3, or Option 4.

Option 1: one 8-port fully coherent codeword is introduced into the 8-port non-coherent codebook.

Option 1-1: for different (N1, N2) antenna configurations, a fully coherent codeword with the smallest index value is introduced:

> when (N1,N2)=(4,1), a codeword (e.g., codeword B) corresponding to 'i1,1'=0, 'i1,2'=0, 'i1,3'=0 and 'i2'=0 is selected;
> when (N1,N2)=(2,2), a codeword (e.g., codeword B) corresponding to 'i1,1'=0, 'i1,2'=0, 'i1,3'=0 and 'i2'=0 is selected.

Option 1-2: for different (N1, N2) antenna configurations, a fully coherent codeword with an arbitrary index value is introduced.

Option 2: all 8-port fully coherent codewords are introduced into the 8-port non-coherent codebook.

Option 3: one 8-port partially coherent codeword is introduced into the 8-port non-coherent codebook.

Option 3-1: for different (N1, N2) antenna configurations, a coherent codeword with the smallest index value is introduced:

in a case that the layer division is 1+1, A1 and A2 are all the codeword (e.g., codeword C) with TPMI=12 in the R15 uplink 4-port 1-layer codebook.

Note: the above R15 uplink 4-port codebook may use a subset. If a subset is used, the TPMI corresponds to a minimum TPMI in the subset of the codebook.

Option 3-2: for different (N1, N2) antenna configurations, a partial coherent codewords with an arbitrary index value is introduced.

Option 4: all 8-port partially coherent codewords are introduced into the 8-port non-coherent codebook.

In an exemplary embodiment, the number of transmission layers (or rank) is 3 or 4, and the terminal uses a codebook to transmit an uplink signal or an uplink channel. The codebook includes at least one of Option 1, Option 2, Option 3, or Option 4.

Option 1: one 8-port fully coherent codeword is introduced into the 8-port non-coherent codebook.

Option 1-1: for different (N1, N2) antenna configurations, a fully coherent codeword with the smallest index value is introduced:

> when (N1,N2)=(4,1), a codeword (e.g., codeword D) corresponding to 'i1,1'=0, 'i1,2'=0, 'i1,3'=0 and 'i2'=0;
> when (N1,N2)=(2,2), a codeword (e.g., codeword E) corresponding to 'i1,1'=0, 'i1,2'= 0, 'i1,3'=0 and 'i2'=0.

Option 1-2: for different (N1, N2) antenna configurations, the same fully coherent codeword with the smallest index value is introduced:

> when (N1,N2)=(4,1), a codeword (e.g., codeword F) corresponding to 'i1,1'=0, 'i1,2'=0, 'i1,3'=1 and 'i2'=0 is selected;
> when (N1,N2)=(2,2), a codeword (e.g., codeword F) corresponding to 'i1,1'=0, 'i1,2'=0, 'i1,3'=1 and 'i2'=0 is selected.

Option 1-3: for different (N1, N2) antenna configurations, a fully coherent codeword with an arbitrary index value is introduced.

Option 2: all 8-port fully coherent codewords are introduced into the 8-port non-coherent codebook.

Option 3: one 8-port partially coherent codeword is introduced into the 8-port non-coherent codebook.

Option 3-1: for different (N1, N2) antenna configurations, a coherent codeword with the smallest index value is introduced:

in a case that the layer division is 1+2, A1 is a codeword with TPMI=12 in the R15 uplink 4-port 1-layer codebook, and A2 is a codeword with TPMI=14 in the R15 uplink 4-port 2-layer codebook, for example, codeword G;
in a case that the layer division is 2+1, A1 is a codeword with TPMI=14 in the R15 uplink 4-port 2-layer codebook, and A2 is a codeword with TPMI=12 in the R15 uplink 4-port 1-layer codebook, for example, codeword H;

in a case that the layer division is 2+2, both A1 and A2 are a codeword with TPMI=14 in the R15 uplink 4-port 2-layer codebook;

Note: the above R15 uplink 4-port codebook may use a subset. If a subset is used, the TPMI corresponds to a minimum TPMI in the subset of the codebook.

Option 3-2: for different (N1, N2) antenna configurations, a partial coherent codewords with an arbitrary index value is introduced.

Option 4: all 8-port partially coherent codewords are introduced into the 8-port non-coherent codebook.

In an exemplary embodiment, the number of transmission layers (or rank) is 5, 6, or 7, and the terminal uses a codebook to transmit an uplink signal or an uplink channel. The codebook includes at least one of Option 1, Option 2, Option 3, or Option 4.

Option 1: one 8-port fully coherent codeword is introduced into the 8-port non-coherent codebook.

Option 1-1: for different (N1, N2) antenna configurations, a fully coherent codeword with the smallest index value is introduced:

when (N1,N2)=(4,1), a codeword (e.g., codeword J) corresponding to 'i1,1'=0, 'i1,2'=0 and 'i2'=0 is selected;

when (N1,N2)=(2,2), a codeword (e.g. codeword J) corresponding to 'i1,1'=0, 'i1,2'=0 and 'i2' =0 is selected.

Option 1-2: for different (N1, N2) antenna configurations, a fully coherent codeword with an arbitrary index value is introduced.

Option 2: all 8-port fully coherent codewords are introduced into the 8-port non-coherent codebook.

Option 3: one 8-port partially coherent codeword is introduced into the 8-port non-coherent codebook.

Option 3-1: for different (N1, N2) antenna configurations, a coherent codeword with the smallest index value is introduced:

in a case that the layer division is 2+3, A1 is a codeword with TPMI=14 in the R15 uplink 4-port 2-layer codebook, and A2 is a codeword with TPMI=3 in the R15 uplink 4-port 3-layer codebook, for example, codeword K;

in a case that the layer division is 3+2, A1 is a codeword with TPMI=3 in the R15 uplink 4-port 3-layer codebook, and A2 is a codeword with TPMI=14 in the R15 uplink 4-port 2-layer codebook, for example, codeword K;

in a case that the layer division is 3+3, both A1 and A2 are a codeword with TPMI=3 in the R15 uplink 4-port 3-layer codebook;

in a case that the layer division is 3+4, A1 is a codeword with TPMI=3 in the R15 uplink 4-port 3-layer codebook, and A2 is a codeword with TPMI=3 in the R15 uplink 4-port 4-layer codebook;

in a case that the layer division is 4+3, A1 is a codeword with TPMI=3 in the R15 uplink 4-port 4-layer codebook, and A2 is a codeword with TPMI=3 in the R15 uplink 4-port 3-layer codebook;

Note: the above R15 uplink 4-port codebook may use a subset. If a subset is used, the TPMI corresponds to a minimum TPMI in the subset of the codebook.

Option 3-2: for different (N1, N2) antenna configurations, a partial coherent codewords with an arbitrary index value is introduced.

Option 4: all 8-port partially coherent codewords are introduced into the 8-port non-coherent codebook.

For example, illustration of the codewords A to J are shown in Tables 2, 3 and 4 below.

Table 2

$$A = \frac{1}{\sqrt{8}} \begin{bmatrix} 1 \\ 1 \\ 1 \\ 1 \\ 1 \\ 1 \\ 1 \\ 1 \end{bmatrix} \quad B = \frac{1}{\sqrt{16}} \begin{bmatrix} 1 & 1 \\ 1 & 1 \\ 1 & 1 \\ 1 & 1 \\ 1 & -1 \\ 1 & -1 \\ 1 & -1 \\ 1 & -1 \end{bmatrix} \quad C = \begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix} \quad D = \frac{1}{\sqrt{24}} \begin{bmatrix} 1 & 1 & 1 \\ 1 & j & 1 \\ 1 & -1 & 1 \\ 1 & -j & 1 \\ 1 & 1 & -1 \\ 1 & j & -1 \\ 1 & -1 & -1 \\ 1 & -j & -1 \end{bmatrix}$$

(continued)

$$E = \frac{1}{\sqrt{24}}\begin{bmatrix} 1 & 1 & 1 \\ 1 & 1 & 1 \\ 1 & -1 & 1 \\ 1 & -1 & 1 \\ 1 & 1 & -1 \\ 1 & 1 & -1 \\ 1 & -1 & -1 \\ 1 & -1 & -1 \end{bmatrix} \qquad F = \frac{1}{\sqrt{24}}\begin{bmatrix} 1 & 1 & 1 \\ 1 & -1 & 1 \\ 1 & 1 & 1 \\ 1 & -1 & 1 \\ 1 & 1 & -1 \\ 1 & -1 & -1 \\ 1 & 1 & -1 \\ 1 & -1 & -1 \end{bmatrix} \qquad G = \begin{bmatrix} 1 & 0 & 0 \\ 1 & 0 & 0 \\ 0 & 1 & 1 \\ 0 & 1 & 1 \\ 1 & 0 & 0 \\ 1 & 0 & 0 \\ 0 & 1 & -1 \\ 0 & 1 & -1 \end{bmatrix} \qquad H = \begin{bmatrix} 1 & 1 & 0 \\ 1 & 1 & 0 \\ 0 & 0 & 1 \\ 0 & 0 & 1 \\ 1 & -1 & 0 \\ 1 & -1 & 0 \\ 0 & 0 & 1 \\ 0 & 0 & 1 \end{bmatrix}$$

$$I = \begin{bmatrix} 1 & 1 & 0 & 0 \\ 1 & 1 & 0 & 0 \\ 0 & 0 & 1 & 1 \\ 0 & 0 & 1 & 1 \\ 1 & -1 & 0 & 0 \\ 1 & -1 & 0 & 0 \\ 0 & 0 & 1 & -1 \\ 0 & 0 & 1 & -1 \end{bmatrix} \qquad J = \begin{bmatrix} 1 & 0 & 0 & 0 \\ 0 & 1 & 0 & 0 \\ 0 & 0 & 1 & 0 \\ 0 & 0 & 0 & 1 \\ 1 & 0 & 0 & 0 \\ 0 & 1 & 0 & 0 \\ 0 & 0 & 1 & 0 \\ 0 & 0 & 0 & 1 \end{bmatrix}$$

Table 3

$$K = \frac{1}{\sqrt{40}}\begin{bmatrix} 1 & 1 & 1 & 1 & 1 \\ 1 & 1 & j & j & -1 \\ 1 & 1 & -1 & -1 & 1 \\ 1 & 1 & -j & -j & -1 \\ 1 & -1 & 1 & -1 & 1 \\ 1 & -1 & j & -j & -1 \\ 1 & -1 & -1 & 1 & 1 \\ 1 & -1 & -j & j & -1 \end{bmatrix} \qquad L = \frac{1}{\sqrt{40}}\begin{bmatrix} 1 & 1 & 1 & 1 & 1 \\ 1 & 1 & 1 & 1 & -1 \\ 1 & 1 & -1 & -1 & -1 \\ 1 & 1 & -1 & -1 & 1 \\ 1 & -1 & 1 & -1 & 1 \\ 1 & -1 & 1 & -1 & -1 \\ 1 & -1 & -1 & 1 & -1 \\ 1 & -1 & -1 & 1 & 1 \end{bmatrix} \qquad M = \begin{bmatrix} 1 & 1 & 0 & 0 & 0 \\ 1 & 1 & 0 & 0 & 0 \\ 0 & 0 & 1 & 1 & 1 \\ 0 & 0 & 1 & -1 & 1 \\ 1 & -1 & 0 & 0 & 0 \\ 1 & -1 & 0 & 0 & 0 \\ 0 & 0 & 1 & 1 & -1 \\ 0 & 0 & 1 & -1 & -1 \end{bmatrix}$$

$$N = \begin{bmatrix} 1 & 1 & 1 & 0 & 0 \\ 1 & -1 & 1 & 0 & 0 \\ 0 & 0 & 0 & 1 & 1 \\ 0 & 0 & 0 & 1 & 1 \\ 1 & 1 & -1 & 0 & 0 \\ 1 & -1 & -1 & 0 & 0 \\ 0 & 0 & 0 & 1 & -1 \\ 0 & 0 & 0 & 1 & -1 \end{bmatrix} \qquad O = \begin{bmatrix} 1 & 1 & 1 & 0 & 0 & 0 \\ 1 & -1 & 1 & 0 & 0 & 0 \\ 0 & 0 & 0 & 1 & 1 & 1 \\ 0 & 0 & 0 & 1 & -1 & 1 \\ 1 & 1 & -1 & 0 & 0 & 0 \\ 1 & -1 & -1 & 0 & 0 & 0 \\ 0 & 0 & 0 & 1 & 1 & -1 \\ 0 & 0 & 0 & 1 & -1 & -1 \end{bmatrix}$$

Table 4

$$P = \begin{bmatrix} 1 & 1 & 1 & 0 & 0 & 0 & 0 \\ 1 & -1 & 1 & 0 & 0 & 0 & 0 \\ 0 & 0 & 0 & 1 & 1 & 1 & 1 \\ 0 & 0 & 0 & 1 & -1 & 1 & -1 \\ 1 & 1 & -1 & 0 & 0 & 0 & 0 \\ 1 & -1 & -1 & 0 & 0 & 0 & 0 \\ 0 & 0 & 0 & 1 & 1 & -1 & -1 \\ 0 & 0 & 0 & 1 & -1 & -1 & 1 \end{bmatrix} \qquad Q = \begin{bmatrix} 1 & 1 & 1 & 1 & 0 & 0 & 0 \\ 1 & -1 & 1 & -1 & 0 & 0 & 0 \\ 0 & 0 & 0 & 0 & 1 & 1 & 1 \\ 0 & 0 & 0 & 0 & 1 & -1 & 1 \\ 1 & 1 & -1 & -1 & 0 & 0 & 0 \\ 1 & -1 & -1 & 1 & 0 & 0 & 0 \\ 0 & 0 & 0 & 0 & 1 & 1 & -1 \\ 0 & 0 & 0 & 0 & 1 & -1 & -1 \end{bmatrix}$$

$$R = \begin{bmatrix} 1 & 0 & 0 & 0 & 0 \\ 0 & 1 & 0 & 0 & 0 \\ 0 & 0 & 1 & 1 & 0 \\ 0 & 0 & 0 & 0 & 1 \\ 1 & 0 & 0 & 0 & 0 \\ 0 & 1 & 0 & 0 & 0 \\ 0 & 0 & 1 & -1 & 0 \\ 0 & 0 & 0 & 0 & 1 \end{bmatrix} \qquad S = \begin{bmatrix} 1 & 1 & 0 & 0 & 0 & 0 \\ 0 & 0 & 1 & 0 & 0 & 0 \\ 0 & 0 & 0 & 1 & 1 & 0 \\ 0 & 0 & 0 & 0 & 0 & 1 \\ 1 & -1 & 0 & 0 & 0 & 0 \\ 0 & 0 & 1 & 0 & 0 & 0 \\ 0 & 0 & 0 & 1 & -1 & 0 \\ 0 & 0 & 0 & 0 & 0 & 1 \end{bmatrix}$$

$$T = \begin{bmatrix} 1 & 1 & 0 & 0 & 0 & 0 & 0 \\ 0 & 0 & 1 & 0 & 0 & 0 & 0 \\ 0 & 0 & 0 & 1 & 1 & 0 & 0 \\ 0 & 0 & 0 & 0 & 0 & 1 & 1 \\ 1 & -1 & 0 & 0 & 0 & 0 & 0 \\ 0 & 0 & 1 & 0 & 0 & 0 & 0 \\ 0 & 0 & 0 & 1 & -1 & 0 & 0 \\ 0 & 0 & 0 & 0 & 0 & 1 & -1 \end{bmatrix}$$

The embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 5A is a block diagram illustrating a terminal according to an embodiment of the disclosure. As shown in FIG. 5A, the terminal 10 may include at least one of: a transceiver module 11, or a processing module 12.

In some embodiments, the processing module 12 is configured to determine a codebook, in which at least one codeword in the codebook supports full-power uplink transmission by the terminal, and the terminal supports 8-port non-coherent transmission.

The transceiver module 11 is configured to perform at least one of the communication steps (e.g., S201 to S203, but is not limited herein) such as sending and/or receiving performed by the terminal 10 in any of the above methods, which is not repeated herein. Optionally, the processing module 12 is configured to perform at least one of other steps (e.g., S201 to S203, but is not limited herein) performed by the terminal 10 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 5B is a block diagram illustrating a network device according to an embodiment of the disclosure. As shown in FIG. 5B, the network device 20 may include at least one of: a transceiver module 21, or a processing module 22.

In some embodiments, the processing module 22 is configured to determine a codebook for a terminal, in which at least one codeword in the codebook supports full-power uplink transmission by the terminal, and the terminal supports 8-port non-coherent transmission.

The transceiver module 21 is configured to perform at least one of the communication steps (e.g., S201 to S203, but is not limited herein) such as sending and/or receiving performed by the network device 20 in any of the above methods, which is not repeated herein. Optionally, the processing module 22 is configured to perform at least one of other steps (e.g., S201 to S203, but is not limited herein) performed by the network device 20 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

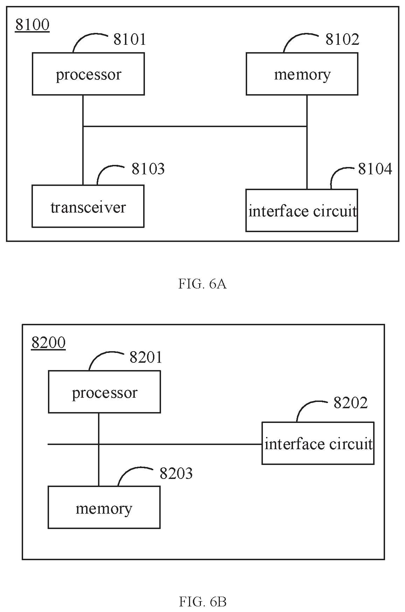

FIG. 6A is a block diagram illustrating a communication device 8100 according to an embodiment of the disclosure. The communication device 8100 may be a network device, or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 6A, the communication device 8100 may include one or more processors 8101. The processor 8101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The communication device 8100 is configured to execute any one of the above methods.

Optionally, the communication device 8100 further includes one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps (e.g., S201 to S203, but is not limited herein) such as sending and/or receiving in the above method, and the processor 8101 performs at least one of other steps (e.g., S201 to S203, but is not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 8100 further includes one or more interface circuits 8104. Optionally, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a terminal, but a scope of the communication device 8100 in the disclosure is not limited to this, and a structure of the communication device 8100 may not be limited by FIG. 6A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 6B is a block diagram illustrating a chip 8200 according to an embodiment of the disclosure. For a case where the communication device 8100 may be a chip or a chip system, reference may be made to the block diagram of the chip 8200 shown in FIG. 6B, but not limited to this.

The chip 8200 includes one or more processors 8201. The chip 8200 is configured to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201.

In some embodiments, the interface circuit 8202 performs at least one of the communication steps such as sending and/or receiving in the above method (e.g., S201 to S203, but is not limited herein), and the processor 6201 performs at least one of other steps (e.g., S201 to S203, but is not limited herein).

In some embodiments, terms such as interface circuit, interface, transceiver pin, transceiver, etc. may be used interchangeably.

In some embodiments, the chip 8200 further includes one or more memories 8203 for storing instructions. Optionally, all or some of the memories 8203 may be located outside the chip 8200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered as going beyond the scope of the disclosure.

Those skilled in the related art may clearly understand that, for a specific working process of a system, an apparatus and a unit described above, reference may be made to a corresponding process in the above method embodiments, which is not repeated herein.

The above are only implementations of the disclosure. However, the protection scope of the disclosure is not limited herein. Changes and substitutions that may be easily considered by those skilled in the art shall be contained within the protection scope of the disclosure. Thus, the protection scope of the disclosure shall be subject to the protection scope of claims.

**Claims**

1. A method for indicating a codebook, performed by a terminal, comprising:
determining a codebook, wherein at least one codeword in the codebook supports full-power uplink transmission by the terminal, and the terminal supports 8-port non-coherent transmission.

2. The method according to claim 1, wherein determining the codebook comprises:

   receiving indication information sent from a network device, wherein the indication information indicates the codebook; and
   determining the codebook based on the indication information.

3. The method according to claim 1 or 2, wherein the terminal supports 8-port non-coherent transmission with at least one of 1 to 7 transmission layers.

4. The method according to any one of claims 1 to 3, further comprising:
sending capability information to the network device, wherein the capability information indicates that the terminal supports 8-port non-coherent transmission with at least one of 1 to 7 transmission layers.

5. The method according to any one of claims 1 to 4, wherein determining the codebook comprises at least one of:

   determining that the codebook is an 8-port non-coherent codebook with a first value of transmission layers to which one 8-port fully coherent codeword with the first value of transmission layers is added, wherein the terminal supports 8-port non-coherent transmission with the first value of transmission layers, and the first value is at least one of 1 to 7;
   determining that the codebook is an 8-port non-coherent codebook with a second value of transmission layers to which one specific 8-port fully coherent codeword with the second value of transmission layers is added, wherein the terminal supports 8-port non-coherent transmission with the second value of transmission layers, and the second value is at least one of 1 to 7;
   determining that the codebook is an 8-port non-coherent codebook with 1 transmission layer from which one 8-port non-coherent codeword with 1 transmission layer is deleted and to which one 8-port fully coherent codeword with 1 transmission layer is added, wherein the terminal supports 8-port non-coherent transmission with 1 transmission layer;
   determining that the codebook is an 8-port non-coherent codebook with 1 transmission layer from which one 8-port non-coherent codeword with 1 transmission layer is deleted and to which one specific 8-port fully coherent codeword with 1 transmission layer is added, wherein the terminal supports the 8-port non-coherent transmission with 1 transmission layer;
   determining that the codebook is an 8-port non-coherent codebook with a third value of transmission layers to which all 8-port fully coherent codewords with the third value of transmission layers are added, wherein the terminal supports 8-port non-coherent transmission with the third value of transmission layers, and the third value is at least one of 1 to 7;
   determining that the codebook is an 8-port non-coherent codebook with a fourth value of transmission layers to which one partial coherent codeword with the fourth value of transmission layers is added, wherein the terminal supports 8-port non-coherent transmission with the fourth value of transmission layers, and the fourth value is at least one of 2 to 7;
   determining that the codebook is an 8-port non-coherent codebook with a fifth value of transmission layers to which one specific partial coherent codeword with the fifth value of transmission layers is added, wherein the terminal supports 8-port non-coherent transmission with the fifth value of transmission layers, and the fifth value is at least one of 2 to 7; or
   determining that the codebook is an 8-port non-coherent codebook with a sixth value of transmission layers to which all partial coherent codewords with the sixth value of transmission layers are added, wherein the terminal supports 8-port non-coherent transmission with the sixth value of transmission layers, and the sixth value is at least one of 2 to 7.

6. The method according to any one of claims 1 to 5, wherein the codebook comprises at least one of:

an 8-port non-coherent codebook with a first value of transmission layers, and one 8-port fully coherent codeword with the first value of transmission layers, wherein the terminal supports 8-port non-coherent transmission with the first value of transmission layers, and the first value is at least one of 1 to 7;

an 8-port non-coherent codebook with a second value of transmission layers, and one specific 8-port fully coherent codeword with the second value of transmission layers, wherein the terminal supports 8-port non-coherent transmission with the second value of transmission layers, and the second value is at least one of 1 to 7;

an 8-port non-coherent codebook with 1 transmission layer from which one codeword is deleted, and one 8-port fully coherent codeword with 1 transmission layer;

an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, wherein the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, wherein the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, wherein the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, wherein the terminal supports 8-port non-coherent transmission with the sixth value of transmission layers, and the sixth value is at least one of 2 to 7.

7. The method according to claim 5 or 6, wherein

for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, and a first parameter, a second parameter, a third parameter and a fourth parameter are all 0; or

for 3 or 4 transmission layers, the specific 8-port fully coherent codeword is a codeword determined when an antenna configuration is a second configuration, and a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, and a first parameter, a second parameter and a third parameter are all 0; or

for any one of 5 to 7 transmission layers, the specific 8-port fully coherent codeword is a codeword determined when an antenna configuration is a second configuration, and a first parameter, a second parameter and a third parameter are all 0;

wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

wherein the first configuration is that, in one polarization direction, an antenna port count in the horizontal dimension is 4 and an antenna port count in the vertical dimension is 1; and

wherein the second configuration is that, in one polarization direction, an antenna port count in the horizontal dimension is 2 and an antenna port count in the vertical dimension is 2.

8. The method according to any one of claims 5 to 7, wherein

for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

9. The method according to any one of claims 5 to 8, wherein

for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword;

wherein the first port group is {0, 1, 4, 5} and the second port group is {2, 3, 6, 7}; and

the first codeword is a codeword with 4 antenna ports, 1 transmission layer and a transmit precoding matrix indicator (TPMI) being 12, or a codeword corresponding to a minimum TPMI value in a TPMI subset corresponding to a fully coherent codebook with 4 antenna ports and 1 transmission layer.

10. The method according to any one of claims 5 to 8, wherein

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or

for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword;

wherein the first port group is {0, 1, 4, 5}, and the second port group is {2, 3, 6, 7};

the first codeword is a codeword with 4 antenna ports, 1 transmission layer and a transmit precoding matrix indicator (TPMI) being 12, or a codeword corresponding to a minimum TPMI value in a TPMI subset corresponding to a fully coherent codebook with 4 antenna ports and 1 transmission layer; and

the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers.

11. The method according to any one of claims 5 to 8, wherein

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or

for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the second codeword is a codeword with 4 antenna ports, 2 transmission layers and a transmit precoding matrix indicator (TPMI) being 14, or a codeword corresponding to a minimum TPMI value in a TPMI subset corresponding to a fully coherent codebook with 4 antenna ports and 2 transmission layers; and

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer.

12. The method according to any one of claims 5 to 8, wherein

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or

for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the second codeword is a codeword with 4 antenna ports, 2 transmission layers and a transmit precoding matrix indicator (TPMI) being 14, or a codeword corresponding to a minimum TPMI value in a TPMI subset corresponding to a fully coherent codebook with 4 antenna ports and 2 transmission layers;

the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

**13.** The method according to any one of claims 5 to 8, wherein

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 6 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the third codeword is a codeword with 2 antenna ports, 1 transmission layer and a transmit precoding matrix indicator (TPMI) being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

**14.** The method according to any one of claims 5 to 8, wherein

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the third codeword is a codeword with 2 antenna ports, 1 transmission layer and a transmit precoding matrix indicator (TPMI) being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

15. A method for indicating a codebook, performed by a network device, comprising:
determining a codebook for a terminal, wherein at least one codeword in the codebook supports full-power uplink transmission by the terminal, and the terminal supports 8-port non-coherent transmission.

16. The method according to claim 15, further comprising:
sending indication information to the terminal, wherein the indication information indicates the codebook.

17. The method according to claim 15 or 16, wherein the terminal supports 8-port non-coherent transmission with at least one of 1 to 7 transmission layers.

18. The method according to any one of claims 15 to 17, further comprising:
receiving capability information sent from the terminal, wherein the capability information indicates that the terminal supports 8-port non-coherent transmission with at least one of 1 to 7 transmission layers.

19. The method according to any one of claims 15 to 18, wherein determining the codebook for the terminal comprises at least one of:

determining that the codebook is an 8-port non-coherent codebook with a first value of transmission layers to which one 8-port fully coherent codeword with the first value of transmission layers is added, wherein the terminal supports 8-port non-coherent transmission with the first value of transmission layers, and the first value is at least one of 1 to 7;
determining that the codebook is an 8-port non-coherent codebook with a second value of transmission layers to which one specific 8-port fully coherent codeword with the second value of transmission layers is added, wherein the terminal supports 8-port non-coherent transmission with the second value of transmission layers, and the second value is at least one of 1 to 7;
determining that the codebook is an 8-port non-coherent codebook with 1 transmission layer from which one 8-port non-coherent codeword with 1 transmission layer is deleted and to which one 8-port fully coherent codeword with 1 transmission layer is added, wherein the terminal supports 8-port non-coherent transmission with 1 transmission layer;
determining that the codebook is an 8-port non-coherent codebook with 1 transmission layer from which one 8-port non-coherent codeword with 1 transmission layer is deleted and to which one specific 8-port fully coherent codeword with 1 transmission layer is added, wherein the terminal supports the 8-port non-coherent transmission with 1 transmission layer;
determining that the codebook is an 8-port non-coherent codebook with a third value of transmission layers to which all 8-port fully coherent codewords with the third value of transmission layers are added, wherein the terminal supports 8-port non-coherent transmission with the third value of transmission layers, and the third value is at least one of 1 to 7;
determining that the codebook is an 8-port non-coherent codebook with a fourth value of transmission layers to which one partial coherent codeword with the fourth value of transmission layers is added, wherein the terminal supports 8-port non-coherent transmission with the fourth value of transmission layers, and the fourth value is at least one of 2 to 7;
determining that the codebook is an 8-port non-coherent codebook with a fifth value of transmission layers to which one specific partial coherent codeword with the fifth value of transmission layers is added, wherein the terminal supports 8-port non-coherent transmission with the fifth value of transmission layers, and the fifth value is at least one of 2 to 7; or
determining that the codebook is an 8-port non-coherent codebook with a sixth value of transmission layers to which all partial coherent codewords with the sixth value of transmission layers are added, wherein the terminal supports 8-port non-coherent transmission with the sixth value of transmission layers, and the sixth value is at least one of 2 to 7.

20. The method according to any one of claims 15 to 19, wherein the codebook comprises at least one of:

an 8-port non-coherent codebook with a first value of transmission layers, and one 8-port fully coherent codeword with the first value of transmission layers, wherein the terminal supports 8-port non-coherent transmission with the first value of transmission layers, and the first value is at least one of 1 to 7;
an 8-port non-coherent codebook with a second value of transmission layers, and one specific 8-port fully coherent codeword with the second value of transmission layers, wherein the terminal supports 8-port non-coherent transmission with the second value of transmission layers, and the second value is at least one of 1 to 7;
an 8-port non-coherent codebook with 1 transmission layer from which one codeword is deleted, and one 8-port fully coherent codeword with 1 transmission layer;
an 8-port non-coherent codebook with 1 transmission layer from which one codeword is deleted, and one specific 8-port fully coherent codeword with 1 transmission layer;

an 8-port non-coherent codebook with a third value of transmission layers, and all 8-port fully coherent codewords with the third value of transmission layers, wherein the terminal supports 8-port non-coherent transmission with the third value of transmission layers, and the third value is at least one of 1 to 7;

an 8-port non-coherent codebook with a fourth value of transmission layers, and one partial coherent codeword with the fourth value of transmission layers, wherein the terminal supports 8-port non-coherent transmission with the fourth value of transmission layers, and the fourth value is at least one of 2 to 7;

an 8-port non-coherent codebook with a fifth value of transmission layers, and one specific partial coherent codeword with the fifth value of transmission layers, wherein the terminal supports 8-port non-coherent transmission with the fifth value of transmission layers, and the fifth value is at least one of 2 to 7; or

an 8-port non-coherent codebook with a sixth value of transmission layers, and all partial coherent codewords with the sixth value of transmission layers, wherein the terminal supports 8-port non-coherent transmission with the sixth value of transmission layers, and the sixth value is at least one of 2 to 7.

**21.** The method according to claim 19 or 20, wherein

for 1 transmission layer, the specific 8-port fully coherent codeword is a codeword determined when a first parameter, a second parameter, and a third parameter are all 0; or

for 2 transmission layers, the specific 8-port fully coherent codeword is a codeword determined when a first parameter, a second parameter, a third parameter and a fourth parameter are all 0; or

for 3 or 4 transmission layers, the specific 8-port fully coherent codeword is a codeword determined when an antenna configuration is a first configuration, a first parameter, a second parameter, a third parameter and a fourth parameter are all 0; or

for 3 or 4 transmission layers, the specific 8-port fully coherent codeword is a codeword determined when an antenna configuration is a second configuration, a first parameter, a second parameter, a third parameter and a fourth parameter are all 0; or

for 3 or 4 transmission layers, the specific 8-port fully coherent codeword is a codeword determined when a first parameter, a second parameter and a third parameter are all 0, and a fourth parameter is 1;

for any one of 5 to 7 transmission layers, the specific 8-port fully coherent codeword is a codeword determined when an antenna configuration is a first configuration, a first parameter, a second parameter and a third parameter are all 0; or

for any one of 5 to 7 transmission layers, the specific 8-port fully coherent codeword is a codeword determined when an antenna configuration is a second configuration, a first parameter, a second parameter and a third parameter are all 0;

wherein the first parameter indicates a beam index selected in a horizontal dimension, the second parameter indicates a beam index selected in a vertical dimension, the third parameter indicates a co-phasing coefficient between two polarization directions, and the fourth parameter indicates a rotation index;

wherein the first configuration is that, in one polarization direction, an antenna port count in the horizontal dimension is 4 and an antenna port count in the vertical dimension is 1; and

wherein the second configuration is that, in one polarization direction, an antenna port count in the horizontal dimension is 2 and an antenna port count in the vertical dimension is 2.

**22.** The method according to any one of claims 19 to 21, wherein

for 2 transmission layers, the partial coherent codeword is an 8-port partial coherent codeword with 2 transmission layers and 2 antenna port groups; or

for 3 transmission layers, the partial coherent codeword is an 8-port partial coherent codeword with 3 transmission layers and 2 antenna port groups; or

for 4 transmission layers, the partial coherent codeword is an 8-port partial coherent codeword with 4 transmission layers and 2 antenna port groups and/or an 8-port partial coherent codeword with 4 transmission layers and 4 antenna port groups; or

for 5 transmission layers, the partial coherent codeword is an 8-port partial coherent codeword with 5 transmission layers and 2 antenna port groups and/or an 8-port partial coherent codeword with 5 transmission layers and 4 antenna port groups; or

for 6 transmission layers, the partial coherent codeword is an 8-port partial coherent codeword with 6 transmission layers and 2 antenna port groups and/or an 8-port partial coherent codeword with 6 transmission layers and 4 antenna port groups; or

for 7 transmission layers, the partial coherent codeword is an 8-port partial coherent codeword with 7 transmission layers and 2 antenna port groups and/or an 8-port partial coherent codeword with 7 transmission layers and 4 antenna port groups.

23. The method according to any one of claims 19 to 22, wherein

for 2 transmission layers, the specific partial coherent codeword is related to a first codeword, a mapping relationship exists between values corresponding to ports in a first port group of a first layer of the specific partial coherent codeword and values corresponding to ports of the first codeword, and a mapping relationship exists between values corresponding to ports in a second port group of a second layer of the specific partial coherent codeword and values corresponding to ports of the first codeword;
wherein the first port group is {0, 1, 4, 5} and the second port group is {2, 3, 6, 7}; and
the first codeword is a codeword with 4 antenna ports, 1 transmission layer and a transmit precoding matrix indicator (TPMI) being 12, or a codeword corresponding to a minimum TPMI value in a TPMI subset corresponding to a fully coherent codebook with 4 antenna ports and 1 transmission layer.

24. The method according to any one of claims 19 to 22, wherein

for 3 transmission layers, the specific partial coherent codeword is related to a first codeword and a second codeword, a mapping relationship exists between values corresponding to ports in a first port group of a first layer of the specific partial coherent codeword and values corresponding to ports of the first codeword, a mapping relationship exists between values corresponding to ports in a second port group of a second layer of the specific partial coherent codeword and values corresponding to ports of a first layer of the second codeword, and a mapping relationship exists between values corresponding to ports in a second port group of a third layer of the specific partial coherent codeword and values corresponding to ports of a second layer of the second codeword; or
for 3 transmission layers, the specific partial coherent codeword is related to a first codeword and a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, and a mapping relationship exists between values corresponding to ports in a second port group of a third layer of the specific partial coherent codeword and values corresponding to ports of the first codeword;
wherein the first port group is {0, 1, 4, 5}, and the second port group is {2, 3, 6, 7};
the first codeword is a codeword with 4 antenna ports, 1 transmission layer and a transmit precoding matrix indicator (TPMI) being 12, or a codeword corresponding to a minimum TPMI value in a TPMI subset corresponding to a fully coherent codebook with 4 antenna ports and 1 transmission layer; and
the second codeword is a codeword with 4 antenna ports, 2 transmission layers and a TPMI being 14, or a codeword corresponding to a minimum TPMI value in a TPMI subset corresponding to a fully coherent codebook with 4 antenna ports and 2 transmission layers.

25. The method according to any one of claims 19 to 22, wherein

for 4 transmission layers, the specific partial coherent codeword is related to a second codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of the first layer of the second codeword, and a mapping relationship exists between values corresponding to ports in a second port group of a fourth layer of the specific partial coherent codeword and values corresponding to ports of the second layer of the second codeword; or
for 4 transmission layers, the specific partial coherent codeword is related to a third codeword, a mapping relationship exists between values corresponding to ports of the third codeword and values corresponding to ports in a third port group of a first layer, or in a fourth port group of a second layer, or in a fifth port group of a third layer, or in a sixth port group of a fourth layer of the specific partial coherent codeword;
wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};
the second codeword is a codeword with 4 antenna ports, 2 transmission layers and a transmit precoding matrix indicator (TPMI) being 14, or a codeword corresponding to a minimum TPMI value in a TPMI subset corresponding to a fully coherent codebook with 4 antenna ports and 2 transmission layers; and
the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer.

26. The method according to any one of claims 19 to 22, wherein

for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the second codeword, a mapping relationship exists between values corresponding to ports in a first port group of a second layer of the specific partial coherent codeword and values corresponding to ports of a second layer of the second codeword, a mapping relationship exists between values corresponding to ports in a second port group of a third layer of the specific partial coherent codeword and values corresponding to ports of a first layer of the fourth codeword, a mapping relationship exists between values corresponding to ports in a second port group of a fourth layer of the specific partial coherent codeword and values corresponding to ports of a second layer of the fourth codeword, and a mapping relationship exists between values corresponding to ports in a second port group of a fifth layer of the specific partial coherent codeword and values corresponding to ports of a third layer of the fourth codeword; or
for 5 transmission layers, the specific partial coherent codeword is related to a second codeword and a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the second codeword, and a mapping relationship exists between values corresponding to ports in a second port group of a fifth layer of the specific partial coherent codeword and values corresponding to ports of a second layer of the second codeword; or
for 5 transmission layers, the specific partial coherent codeword is related to a third codeword and a sixth codeword, a mapping relationship exists between values corresponding to ports of the third codeword and values corresponding to ports in a third port group of a first layer, or in a fourth port group of a second layer, or in a sixth port group of a fifth layer of the specific partial coherent codeword; a mapping relationship exists between values corresponding to ports in a fifth port group of a third layer of the specific partial coherent codeword and values corresponding to ports of a first layer of the sixth codeword, and a mapping relationship exists between values corresponding to ports in a fifth port group of a fourth layer of the specific partial coherent codeword and values corresponding to ports of a second layer of the sixth codeword;
wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};
the second codeword is a codeword with 4 antenna ports, 2 transmission layers and a transmit precoding matrix indicator (TPMI) being 14, or a codeword corresponding to a minimum TPMI value in a TPMI subset corresponding to a fully coherent codebook with 4 antenna ports and 2 transmission layers;
the third codeword is a codeword with 2 antenna ports, 1 transmission layer and a TPMI being 2, or a codeword corresponding to a minimum TPMI value in a TPMI subset corresponding to a fully coherent codebook with 2 antenna ports and 1 transmission layer;
the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers; and
the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

27. The method according to any one of claims 19 to 22, wherein

for 6 transmission layers, the specific partial coherent codeword is related to a fourth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of the first layer of the fourth codeword, a mapping relationship exists between values corresponding to ports in a second port group of a fifth layer of the specific partial coherent codeword and values corresponding to ports of the second layer of the fourth codeword, and a mapping relationship exists between values corresponding to ports in a second port group of a sixth layer of the specific partial coherent codeword and values corresponding to ports of the third layer of the fourth codeword; or

for 5 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the first layer of the sixth codeword, and a mapping relationship exists between values corresponding to ports in a sixth port group of a sixth layer of the specific partial coherent codeword and values corresponding to ports of the third codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the third codeword is a codeword with 2 antenna ports, 1 transmission layer and a transmit precoding matrix indicator (TPMI) being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

28. The method according to any one of claims 19 to 22, wherein

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fourth codeword, a mapping relationship exists between values corresponding to ports in a first port group of a second layer of the specific partial coherent codeword and values corresponding to ports of a second layer of the fourth codeword, a mapping relationship exists between values corresponding to ports in a first port group of a third layer of the specific partial coherent codeword and values corresponding to ports of a third layer of the fourth codeword, a mapping relationship exists between values corresponding to ports in a second port group of a fourth layer of the specific partial coherent codeword and values corresponding to ports of a first layer of the fifth codeword, a mapping relationship exists between values corresponding to ports in a second port group of a fifth layer of the specific partial coherent codeword and values corresponding to ports of a second layer of the fifth codeword, a mapping relationship exists between values corresponding to ports in a second port group of a sixth layer of the specific partial coherent codeword and values corresponding to ports of a third layer of the fifth codeword, and a mapping relationship exists between values corresponding to ports in a second port group of a seventh layer of the specific partial coherent codeword and values corresponding to ports of a fourth layer of the fifth codeword; or

for 7 transmission layers, the specific partial coherent codeword is related to a fourth codeword and a fifth codeword, a mapping relationship exists between values corresponding to ports in a first port group of a first layer of the specific partial coherent codeword and values corresponding to ports of a first layer of the fifth codeword, a mapping relationship exists between values corresponding to ports in a first port group of a second layer of the specific partial coherent codeword and values corresponding to ports of a second layer of the fifth codeword, a mapping relationship exists between values corresponding to ports in a first port group of a third layer of the specific partial coherent codeword and values corresponding to ports of a third layer of the fifth codeword, a mapping relationship exists between values corresponding to ports in a first port group of a fourth layer of the specific partial coherent codeword and values corresponding to ports of a fourth layer of the fifth codeword, a mapping relationship exists between values corresponding to ports in a second port group of a fifth layer of the specific partial coherent codeword and values corresponding to ports of a first layer of the fourth codeword, a mapping relationship exists between values corresponding to ports in a second port group of a sixth layer of the specific partial coherent codeword and values corresponding to ports of a second layer of the fourth codeword, and a mapping relationship exists between values corresponding to ports in a second port group of a seventh layer of the specific partial coherent codeword and values corresponding to ports of a third layer of the fourth codeword; or

for 7 transmission layers, the specific partial coherent codeword is related to a third codeword and a sixth codeword, a mapping relationship exists between values corresponding to ports in a third port group of a first layer of the specific partial coherent codeword and values corresponding to ports of a first layer of the sixth codeword, a mapping relationship exists between values corresponding to ports in a third port group of a second layer of the specific partial coherent codeword and values corresponding to ports of a second layer of the sixth codeword, a mapping relationship exists between values corresponding to ports in a fourth port group of a third layer of the specific partial coherent codeword and values corresponding to ports of the third codeword, a mapping relationship exists between values corresponding to ports in a fifth port group of a fourth layer of the specific partial coherent codeword and values corresponding to ports of the first layer of the sixth codeword, a mapping relationship exists between values corresponding to ports in a fifth port group of a fifth layer of the specific partial coherent codeword and values corresponding to ports of the second layer of the sixth codeword, a mapping relationship exists between values corresponding to ports in a sixth port group of a sixth layer of the specific partial coherent codeword and values corresponding to ports of the first layer of the sixth codeword, and a mapping relationship exists between values corresponding to ports in a sixth port group of a seventh layer of the specific partial coherent codeword and values corresponding to ports of the second layer of the sixth codeword;

wherein the first port group is {0, 1, 4, 5}, the second port group is {2, 3, 6, 7}, the third port group is {0, 4}, the fourth port group is {1, 5}, the fifth port group is {2, 6} and the sixth port group is {3, 7};

the third codeword is a codeword with 2 antenna ports, 1 transmission layer and a transmit precoding matrix indicator (TPMI) being 2, or a codeword corresponding to a minimum TPMI value in a TPMI subset corresponding to a fully coherent codebook with 2 antenna ports and 1 transmission layer;

the fourth codeword is a codeword with 4 antenna ports, 3 transmission layers and a TPMI being 3, or a codeword corresponding to a minimum TPMI value in a TPMI subset corresponding to a fully coherent codebook with 4 antenna ports and 3 transmission layers;

the fifth codeword is a codeword with 4 antenna ports, 4 transmission layers and a TPMI being 3, or a codeword corresponding to a minimum TPMI value in a TPMI subset corresponding to a fully coherent codebook with 4 antenna ports and 4 transmission layers; and

the sixth codeword is a codeword with 2 antenna ports, 2 transmission layers and a TPMI being 1, or a codeword corresponding to a minimum TPMI value in a TPMI subset corresponding to a fully coherent codebook with 2 antenna ports and 2 transmission layers.

29. A method for indicating a codebook, comprising:

determining, by a network device, a codebook for a terminal; and
determining, by a terminal, a codebook, wherein at least one codeword in the codebook supports full-power uplink transmission by the terminal, and the terminal supports 8-port non-coherent transmission.

30. A terminal, comprising:
a processing module, configured to determine a codebook, wherein at least one codeword in the codebook supports full-power uplink transmission by the terminal, and the terminal supports 8-port non-coherent transmission.

31. A network device, comprising:
a processing module, configured to determine a codebook for a terminal, wherein at least one codeword in the codebook supports full-power uplink transmission by the terminal, and the terminal supports 8-port non-coherent transmission.

32. A terminal, comprising:

one or more processors;
wherein the terminal is configured to perform the method according to any one of claims 1 to 14.

33. A network device, comprising:

one or more processors;
wherein the network device is configured to perform the method according to any one of claims 15 to 28.

34. A communication system, comprising:
a terminal, configured to perform the method according to any one of claims 1 to 14, and a network device, configured to perform the method according to any one of claims 15 to 28.

35. A storage medium, storing instructions which, when executed on a communication device, cause the communication device to perform the method according to any one of claims 1 to 14 or the method according to any one of claims 15 to 28.

communication system

100

101

terminal

102

network device

FIG. 1

terminal                    network device

S201，sending capability information

S202，determining a codebook

S203，sending indication information

FIG. 2

determining a codebook                    S301A

FIG. 3A

sending, by a terminal, capability information to a network device, wherein the capability information indicates that the terminal supports 8-port non-coherent transmission with at least one of 1 to 7 transmission layers                    S301B

receiving, by the terminal, indication information sent by the network device, wherein the indication information indicates a codebook configured by the network device for the terminal, and at least one codeword in the codebook supports full-power transmission of an uplink signal/channel by the terminal                    S302B

FIG. 3B

determining a codebook                    S401A

sending the codebook                    S402A

FIG. 4A

receiving capability information sent by a terminal — S401B

determining a codebook for the terminal, wherein at least one codeword in the codebook supports full-power transmission of an uplink signal/channel by the terminal — S402B

sending the codebook — S403B

FIG. 4B

10

terminal — 11

transceiver module — 11

processing module — 12

FIG. 5A

20

network device — 21

transceiver module — 21

processing module — 22

FIG. 5B

8100

8101
processor

8102
memory

8103
transceiver

8104
interface circuit

FIG. 6A

8200

8201
processor

8202
interface circuit

8203
memory

FIG. 6B

## INTERNATIONAL SEARCH REPORT

| International application No. |
| --- |
| **PCT/CN2023/111112** |

### A. CLASSIFICATION OF SUBJECT MATTER

H04B7/0456(2017.01)i

According to International Patent Classification (IPC) or to both national classification and IPC

### B. FIELDS SEARCHED

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, ENTXTC, VEN: 八, 端口, 非相干, 码本, 满功率, 全功率, 码字, 8TX, codebook, codeword, CW, full, fullpower, power, TPMI, TX, "8", non-coherent, port

### C. DOCUMENTS CONSIDERED TO BE RELEVANT

| Category* | Citation of document, with indication, where appropriate, of the relevant passages | Relevant to claim No. |
| --- | --- | --- |
| X | US 2023148388 A1 (SAMSUNG ELECTRONICS CO., LTD.) 11 May 2023 (2023-05-11) description, paragraphs [0092]-[0252] | 1-35 |
| X | VIVO. "Further discussion on enabling 8 TX UL transmission" *R1-2304469, 3GPP TSG RAN WG1 #113*, 26 May 2023 (2023-05-26), pages 1-15 | 1-35 |
| X | QUALCOMM INC. "Enhancements for 8 Tx UL transmissions" *R1- 2303579, 3GPP TSG RAN WG1 #112bis-e*, 26 April 2023 (2023-04-26), pages 1-20 and 25-27 | 1-35 |
| A | CN 110535508 A (ZTE CORP.) 03 December 2019 (2019-12-03) entire document | 1-35 |
| A | US 2022287059 A1 (DATANG MOBILE COMMUNICATIONS EQUIPMENT CO., LTD.) 08 September 2022 (2022-09-08) entire document | 1-35 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 April 2024** | **24 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/111112**

**C.    DOCUMENTS CONSIDERED TO BE RELEVANT**

| Category* | Citation of document, with indication, where appropriate, of the relevant passages | Relevant to claim No. |
|---|---|---|
| A | WO 2023031796 A1 (TELEFONAKTIEBOLAGET LM ERICSSON (PUBL)) 09 March 2023 (2023-03-09)<br>entire document | 1-35 |

Form PCT/ISA/210 (second sheet) (July 2022)

**INTERNATIONAL SEARCH REPORT**
**Information on patent family members**

International application No.

**PCT/CN2023/111112**

| Patent document cited in search report | | | Publication date (day/month/year) | Patent family member(s) | | | Publication date (day/month/year) |
|---|---|---|---|---|---|---|---|
| US | 2023148388 | A1 | 11 May 2023 | WO | 2023048469 | A1 | 30 March 2023 |
| CN | 110535508 | A | 03 December 2019 | WO | 2021018078 | A1 | 04 February 2021 |
| | | | | KR | 20220042187 | A | 04 April 2022 |
| | | | | CA | 3144172 | A1 | 04 February 2021 |
| | | | | EP | 4007179 | A1 | 01 June 2022 |
| | | | | US | 2022329307 | A1 | 13 October 2022 |
| US | 2022287059 | A1 | 08 September 2022 | TW | 202110237 | A | 01 March 2021 |
| | | | | EP | 4016886 | A1 | 22 June 2022 |
| | | | | KR | 20220047352 | A | 15 April 2022 |
| | | | | WO | 2021031913 | A1 | 25 February 2021 |
| | | | | CN | 112399403 | A | 23 February 2021 |
| WO | 2023031796 | A1 | 09 March 2023 | | None | | |

Form PCT/ISA/210 (patent family annex) (July 2022)